# EUROPEAN PATENT SPECIFICATION

(11) **EP 2 074 172 B1**
(45) Date of publication and mention of the grant of the patent: **07.09.2016**
(21) Application number: 08832780.4
(22) Date of filing: 24.09.2008
(51) Int. Cl.: C08L 51/06, H01B 1/24, C08F 255/00, C08F 255/02, C08F 8/42, C08L 101/10

(54) **SILANE-FUNCTIONALISED POLYOLEFIN COMPOSITIONS, PRODUCTS THEREOF AND PREPARATION PROCESSES THEREOF FOR WIRE AND CABLE APPLICATIONS**
SILANFUNKTIONALISIERTE POLYOLEFINZUSAMMENSETZUNGEN, PRODUKTE DARAUS UND ZUBEREITUNGSVERFAHREN DARAUS FÜR DRAHT- UND KABELANWENDUNGEN
COMPOSITIONS DE POLYOLÉFINE À FONCTION SILANE, SES PRODUITS ET SES PROCÉDÉS DE PRÉPARATION POUR DES APPLICATIONS DE FILS ET DE CÂBLES

(30) Priority: 31.10.2007 EP 07119775
(43) Date of publication of application: 01.07.2009
(73) Proprietor: Borealis Technology OY, 06101 Porvoo (FI)
(72) Inventor: FAGRELL, Ola, 444 45 Stenungsund (SE)
(74) Representative: Campbell, Neil Boyd
(86) International application number: PCT/EP2008/062743
(87) International publication number: WO 2009/056409

(56) References cited:
- WO-A-97/19965
- WO-A-98/14516
- WO-A-02/073630
- WO-A-2005/005532
- GB-A- 2 116 986
- US-A- 5 948 865

## Description

### Field of invention

The invention relates to silane-functionalised polyolefin compositions, to silanecrosslinkable polyolefin compositions and to silane-crosslinked polyolefin compositions, to a preparation process thereof, to their use for producing products and to the obtained products, to their use for W&C applications, preferably for producing one or more layers of a cable comprising said silane-functionalised polyolefin composition, as well as to silane-crosslinked cables comprising polyolefin compositions.

### Background art

It is known to modify polymers for tailoring their properties. Crosslinking of polymers is one well known modification method in many end applications of polymers. Crosslinking of polymers, such as polyolefins, substantially contributes i.a. to heat and deformation resistance, creep properties, mechanical strength, as well as to chemical and abrasion resistance of a polymer. In wire and cable applications crosslinked polymers, such as crosslinked polyethylenes, are commonly used as a layer material, e.g. in insulating, semi-conducting and/or jacketing layers.

In wire and cable applications a typical cable comprises at least one conductor surrounded by one or more layers of polymeric materials. In power cables, including medium voltage (MV), high voltage (HV) and extra high voltage (EHV), said conductor is surrounded by several layers including an inner semiconductive layer, an insulation layer and an outer semiconductive layer, in that order. The cables are commonly produced by extruding the layers on a conductor. One or more of said layers are then typically crosslinked to achieve the desired properties to the end product cable.

Crosslinking can be effected i.a. by radical reaction using radiation or free radical generating agents, also called crosslinking agents. Examples of such free radical generating agents are peroxides including inorganic and organic peroxides. Crosslinking using peroxide is known as peroxide technology.
A further well known crosslinking method is crosslinking functional groups, e.g. by hydrolysing hydrolysable silane groups, which are linked to polymer, and subsequently condensing the formed silanol groups using a silanol condensation catalyst, for instance carboxylates of metals, such as tin, zinc, iron, lead and cobalt; organic bases; inorganic acids; and organic acids. The crosslinking of polymers via silane groups thereof is known as silane-crosslinking technology, and for hydrolysable silane groups also called as moisture curing technology. Silane groups can be introduced into the polymer structure 1) by copolymerisation of monomers, such as olefin monomers, with silane-moiety bearing comonomers, or 2) by grafting crosslinkable silane-moieties bearing compounds, such as unsaturated silane compounds with hydrolysable silane group(s), onto a polymer. Both methods are well known in the art. Grafting is usually performed by radical reaction using free radical generating agents.

Free radical generation using free radical generating agents is thus conventionally used e.g. (a) for crosslinking a polymer, i.a. for forming primarily interpolymer crosslinks (bridges) by radical reaction, (b) for grafting a polymer, i.e. for introducing compounds, such as said silane compounds, to a polymer chain (to backbone and/or side chains) by radical reaction, and also (c) for visbreaking a polymer, e.g. for modifying the rheological properties, such as melt flow rate (MFR), by radical reaction.

When grafting silane groups containing compounds to polyethylene polymer using free radical generating agents, then also undesirable crosslinking thus occurs as an undesired side-reaction. Crosslinking increases the viscosity of the polyethylene and as a result also the MFR decreases. Highly viscose polymer is difficult to process, e.g. extrude, since high energy input is required in order to achieve sufficient mixing, i.e. homogeneity, and sufficient through-put (production rate) during the processing step. Higher energy-input and thus heat formed due to viscose material naturally can cause undesired degradation of the polymer.

The crosslinking side-reaction brings therefore limitation to the amount of silane groups to be grafted, since the more silane groups is added the more free radical generating agent is needed, whereby also more crosslinking side-reactions take place resulting in increased viscosity (decreased MFR) of the polymer. Accordingly, in order to enable the sufficient processability the amount of crosslinkable silane groups and thus the resulting degree of crosslinking of the silane-grafted polyethylene must usually be kept relatively low.

Said crosslinking degree can be expressed i.a. as gel content of the crosslinked polymer material. Thus in the prior art in order to maintain a sufficient processability, said degree of crosslinking of silane-grafted and silane-crosslinked polymers has conventionally been kept at a level which, when defined being the gel content of a crosslinked polymer, corresponds to a gel content of 25-30 wt%, when measured according to ASTM D2765-95 using a crosslinked polymer sample.

On the other hand, polymers with high degree of crosslinking are very advantageous in many demanding application areas of polymers, e.g. in demanding wire and cable applications. Crosslinking has been very feasible means for enabling the use of many polymer materials and/or for enabling the cable and thus the polymer material to meet certain criteria set by the authorities in many countries for said application. For instance, the crosslinked polymer material for medium and higher voltage semiconductive cables must meet a certain hot set elongation property, which is typically < 175%, when determined according to IEC 60811-2-1 method (at 200 °C, with a load of at least 0.1 MPa, depending on a country) using a sample consisting of said crosslinked polymer material. To achieve said hot set elongation value would normally require a relative high degree of crosslinking of the polymer material, which when defined in terms of gel content would be as high as of more than 40 wt%, when determined as defined above. Such gel content can clearly not be met with conventional silane-grafted and silane-crosslinked polymers which, as said above, require as low gel content as of 25-30 wt% to be still processable.

Furthermore, e.g. semiconductive layer materials have typically a high filler content, whereby said filler, usually carbon black, also increases the viscosity of the polymer material.

WO98/14516 discloses compositions comprising a silane-containing ethylene-based polymer and carbon black having a specific surface area of 30-80 m²/g.

Thus in practice, the use of crosslinkable silane-grafted polymers of prior art has been limited, if used at all, in applications, such as in crosslinkable semiconductive layer materials. Accordingly, there is a continuous need for alternative polymer compositions suitable for different application areas of polymers and suitable for meeting the increasing demands of the end users.

### Summary of the invention

One of the objects of the present invention is to provide an alternative silane-functionalised polyolefin composition, which exhibits an excellent balance between mechanical properties and processing properties. Preferably, said composition can also have very good storage stability. A further object of the present invention is to provide a process for preparing said polyolefin composition of the invention.

The invention also provides a silane-crosslinkable polyolefin composition which has an excellent processability within a broad crosslinking window. The invention enables to obtain silane-crosslinkable polymers that provide i.a. high degree of crosslinking, however, without sacrificing processability. Moreover, a process for silane-crosslinking said polyolefin composition is provided, as well as a silane-crosslinked polyolefin composition which has excellent mechanical, i.a. hot set elongation, properties. Additionally, also silane-crosslinkable and silane-crosslinked products, preferably silane-crosslinkable and silane-crosslinked cables, comprising said silane-crosslinkable and, respectively, silane-crosslinked, preferably silane-grafted, polyolefin composition, are provided which are feasible to produce and have excellent mechanical properties. Advantageously, said crosslinked product may further provide excellent peeling property, also known as low strip force, when desired. The use of polyolefin composition of the invention for wire and cable, W&C, applications, preferably use as a cable layer material, is also provided.

### Description of the invention

The objects of the invention are solved by the polyolefin composition, preparation process, end applications and further solutions thereof These, including the components and preferable subgroups thereof, are further described below, for clarity reasons separately under respective titles, and in claims. The term "subgroups" covers herein any preferable subgroups and embodiments of said polyolefin composition of the invention, of said components thereof and of said preparation processes thereof.

### Polyolefin composition of the invention

The present invention provides a polyolefin composition which comprises
- a polymer component (i) which is a polymer (A) which bears silane-moieties, and is referred herein also as "polymer component (i)",
- a polyolefin component (ii) which is a polymer of an olefin having at least 3 carbon atoms, and is referred herein also as "polyolefin component (ii)", and, optionally,
- a filler (iii).

The expressions "which bears silane-moieties" or "silane-functionalised" etc. as used herein interchangeably all mean that silane-moieties have been introduced into a polymer structure i.a. by means of grafting or copolymerising, preferably by grafting, using a compound or, respectively, a comonomer, which bears a functional silane-moiety as part of said compound or said comonomer, as described later below. Said functional silane-moiety can be subjected to said desired functional chemical reaction for providing a desired effect to said polymer, preferably crosslinkability. Preferable silane-moiety is (Y)_{3-q}Si- moiety, wherein Y= a functional group which is preferably hydrolysable, and q= 0, 1 or 2, which silane-moiety is herein understood to contain 1-3 functional Y-groups, shared by the same Si-atom. Said silane, (Y)_{3-q}Si, -moiety is referred herein also as "(functional) silane-group". Such "functional silane-group" is preferably a hydrolysable silane-group which is crosslinkable by hydrolysation and subsequent condensation reaction in the presence of a silanol condensation catalyst and water, as known in the art, to form Si-O-Si links between other hydrolysable silane-groups present in said (i) polymer component of the polyolefin composition of the invention. Preferred hydrolysable silane-group is a hydrolysable (AO)₃Si-moiety, wherein A= hydrocarbyl group, as will be defined for preferred silane compounds (B) later below. The expressions "which bears silane-moieties" or "silane-functionalised" etc. as used herein interchangeably all mean that silane-moieties have been introduced into a polymer structure i.a. by means of grafting or copolymerising, preferably by grafting, using a compound or, respectively, a comonomer, which bears a functional silane-moiety as part of said compound or said comonomer, as described later below. Said functional silane-moiety can be subjected to said desired functional chemical reaction for providing a desired effect to said polymer, preferably crosslinkability. Preferable silane-moiety is (Y)_{3-q}Si- moiety, wherein Y= a functional group which is preferably hydrolysable, and q= 0, 1 or 2, which silane-moiety is herein understood to contain 1-3 functional Y-groups, shared by the same Si-atom. Said silane, (Y)_{3-q}Si, -moiety is referred herein also as "(functional) silane-group". Such "functional silane-group" is preferably a hydrolysable silane-group which is crosslinkable by hydrolysation and subsequent condensation reaction in the presence of a silanol condensation catalyst and water, as known in the art, to form Si-O-Si links between other hydrolysable silane-groups present in said (i) polymer component of the polyolefin composition of the invention. Preferred hydrolysable silane-group is a hydrolysable (AO)₃Si-moiety, wherein A= hydrocarbyl group, as will be defined for preferred silane compounds (B) later below.

Said functional silane-moiety bearing compound or comonomer used for introducing said silane-groups to polymer of said polymer component (i) is referred herein as silane compound and, respectively, silane comonomer.

The expressions as "crosslinkable" or "silane-crosslinkable" polyolefin composition etc. used interchangeably are well known and mean also herein that the polyolefin composition of the invention can be crosslinked to form bridges i.a. amongst the polymer chains, and particularly mean herein that the polyolefin composition of the invention is crosslinkable at least via said functional silane-groups present at least in said silane-functionalised compounds of said polymer component (i) by a silane-crosslinking reaction as explained above and further below. Thus such crosslinkable polyolefin composition of the invention and/or crosslinkable component (i) thereof is shortly referred herein as "silane-crosslinkable". Similarly, "Crosslinked polyolefin composition" or "silane-crosslinked polyolefin composition", as used interchangeably above and below, mean herein that said polyolefin composition of the invention contains said bridges at least between said silane-groups which bridges are formed during above-said silane-crosslinking reaction explained above. "Silane-crosslinking conditions" mean herein conditions that enable the crosslinking reaction to occur, which is most preferably the above mentioned hydrolysis and subsequent condensation reaction. All these expressions are well known in the art.
Base "polymer (A)" is the base polymer (backbone), wherein the silane-moieties are incorporated in the "final" polymer (A) component (i) and wherein said silane-moieties are introduced during the preparation of said polymer (A) component (i).
"Free radical generating agent" is shortly referred herein also as "initiator".

Said polyolefin composition may comprise independently one or more of each of said polymer component (i), polyolefin component (ii) and optional filler (iii) component. It is also evident that said polyolefin composition may comprise further polymer components or further components, such as additives.

The invention provides silane-functionalised, preferably silane-crosslinkable, polyolefin compositions i.a. with excellent mechanical properties. Surprisingly, due to the combination of said polyolefin component (ii) to said polymer component (i) a high degree of crosslinking can be achieved to said polyolefin composition of the invention, and at the same time the processing of said combination of said polyolefin component (ii) and said polymer component (i) is excellent. The degree of crosslinking is expressed herein as a gel content of a crosslinked polyolefin composition, when measured according to ASTM D2765-95 using a sample consisting of said crosslinked polyolefin composition. The present combination of the invention enables to increase the crosslinking level of a polymer composition, which bears crosslinkable silane-moieties, without sacrificing processability thereof, even when said silane-moieties of said polymer component (i) are introduced by grafting using an initiator. Said polyolefin composition is highly suitable i.a. for wire and cable (W&C) applications. Preferably, such a high degree of crosslinking can be provided that i.a. a hot set elongation can surprisingly be measured from said polyolefin composition after silane-crosslinking thereof. Said polyolefin composition of the invention provides also feasible deformation resistance in silane-crosslinking applications.

Thus said key feature of said polyolefin composition of the invention can be expressed using three alternative technical features which are unitary and independent. Preferably, said three alternative features, in any order, can be used for further defining said polyolefin composition.

Accordingly, as the first independent alternative of said polyolefin composition the invention, (1) a crosslinkable polyolefin composition is provided which comprises
- a polymer component (i) which is a polymer (A) bearing silane-moieties, wherein polymer (A) is selected from:
   a low density polyethylene (LDPE) homopolymer or copolymer, wherein the LDPE copolymer is a copolymer of ethylene and one or more polar comonomer(s),
   a linear low density polyethylene (LLDPE),
   a medium density polyethylene (MDPE) or
   a high density polyethylene (HDPE),
- a polyolefin component (ii) which is a polymer of olefin having at least 3 carbon atoms, and, optionally,
- a filler (iii),
and which polyolefin composition is silane-crosslinkable to a silane-crosslinked polyolefin composition that has a gel content of more than 35.0 wt%, when measured according to ASTM D2765-95 using a sample consisting of said silane-crosslinked polyolefin composition of the invention. Said silane-moieties of base polymer (A) of component (i) are silane-crosslinkable.

As the second independent alternative of said polyolefin composition the invention (2) a crosslinkable polyolefin composition is provided which comprises:
- a polymer component (i) which is a polymer (A) bearing silane-moieties,
   wherein polymer (A) is selected from:
   a low density polyethylene (LDPE) homopolymer or copolymer, wherein the LDPE copolymer is a copolymer of ethylene and one or more polar comonomer(s),
   a linear low density polyethylene (LLDPE),
   a medium density polyethylene (MDPE) or
   a high density polyethylene (HDPE),
- a polyolefin component (ii) which is a polymer of olefin having at least 3 carbon atoms, and, optionally,
- a filler (iii),
and which is silane-crosslinkable to a silane-crosslinked polyolefin composition that has a hot set elongation of less than 250%, when measured according to IEC 60811-2-1, at 200°C with a load of 0.1 MPa using a cable layer sample which has a thickness of 1.0 mm and consists of said silane-crosslinked polyolefin composition of the invention. The hot set elongation method and the test cable layer sample used in the determination were as described below under "Determination methods". Said silane-moieties of base polymer (A) of component (i) are silane-crosslinkable.

Said gel content or, respectively, said hot set elongation, as defined above is thus met when at least polymer component (i) is silane-crosslinked by crosslinking silane groups, preferably hydrolysable silane groups, that are introduced to said polyolefin composition during the preparation of said component (i) as further described below.

The third equally independent alternative (3) of the invention, said polyolefin composition of the invention is defined using a compositional property, i.e. it comprises
- polymer component (i) which is a polymer (A) bearing silane-moieties, wherein polymer (A) is selected from:
   a low density polyethylene (LDPE) homopolymer or copolymer, wherein the LDPE copolymer is a copolymer of ethylene and one or more polar comonomer(s),
   a linear low density polyethylene (LLDPE),
   a medium density polyethylene (MDPE) or
   a high density polyethylene (HDPE),
- polyolefin component (ii) a polymer of olefin having at least 3 carbon atoms, and, optionally,
(iii) a filler.

Said "polyolefin composition of the invention" or shortly also referred herein as "polyolefin composition" means independently each of said polyolefin compositions of alternatives (1), (2) and (3). Also the below preferable subgroups define each alternative independently.

In one preferable embodiment (1) of the invention said polyolefin composition is at least according to said (1) first independent alternative as defined above and further
- has a hot set elongation property as defined above in said (2) second independent alternative of said polyolefin composition of the invention, or
- comprises a polymer component (i) according to said (3) third independent alternative of said polyolefin composition of the invention as defined above, preferably,
- has a hot set elongation property as defined above in said (2) second alternative and comprises a polymer component (i) as defined above in (3) third alternative of polyolefin composition.

In another preferable embodiment (2) said polyolefin composition is at least according to said (2) second independent alternative as defined above and further
- has a gel content as defined above in said (1) first independent alternative of said polyolefin composition of the invention, or
- comprises a polymer component (i) according to said (3) third independent alternative of said polyolefin composition of the invention as defined above, preferably,
- has a gel content as defined above in said (1) first alternative and optionally comprises a polymer component (i) as defined above in said (3) third alternative of polyolefin composition.

Most preferably, said polyolefin composition of the invention is at least according to said (3) third independent alternative as defined above. Preferably, said polyolefin composition of alternative (3) is silane-crosslinkable and has optionally:
- a gel content according to said (1) first independent alternative of said polyolefin composition of the invention as defined above, or
- a hot set elongation property according to said (2) second independent alternative of said polyolefin composition of the invention as defined above, preferably has
- a gel content and a hot set elongation property as defined above in said (1) first alternative and, respectively, (2) second alternative of said polyolefin composition, when in silane-crosslinked form.

Moreover, said polyolefin composition of the invention can have an increased degree of crosslinking and, at the same time, also advantageous processability, even with high filler (iii) content, which combination of excellent mechanical and processing properties is advantageous i.a. in various cable applications, and particularly in providing semiconductive layers that comprise carbon black as said filler (iii).

Preferably and also surprisingly, the combination of said polymer component (i) and said polyolefin component (ii), as defined above and below, provides also an excellent peeling property, i.e. low strip force, which enables to make e.g. strippable semiconductive layers i.a. for medium voltage cable applications. The excellent strippability property of said polyolefin composition of the invention enables to minimize or even avoid the use of additional polar polymer components, e.g. so called NBR which is copolymer of acrylonitrile and butadiene, also known as nitrile butyl rubber or nitrile rubber, and which is often needed in strippable semiconductive layer materials for decreasing the adhesion of said layer onto adjacent layer(s), such as an insulation layer. The preferred polyolefin composition of the invention for use as a semiconductive layer material comprises no added NBR component.

Accordingly said polyolefin composition has a strip force of less than 9.0 kN/m, preferably of from 0.5 to 9.0 kN/m, more preferably of from 0.8 to 7.0 kN/m, more preferably of from 1.0 to 5.0 kN/m, when measured at 90° peeling angle from an outer layer of a test three-layer cable, wherein said outer layer has a thickness of 1.0 mm and consists of said polyolefin composition. The strip force method and the test cable sample used in said determination were as described below under "Determination methods". In said strip force test said polyolefin composition can be uncrosslinked or crosslinked. Most preferably said polyolefin composition is crosslinkable and meets the above strip force property when measured as defined above from a test cable consisting of a crosslinked polyolefin composition.

Additionally, said polyolefin composition has preferably an improved storage stability compared to prior art silane-moieties bearing polymer compositions, particularly in case of silane-grafted polyolefin compositions. Preferably, the undesired MFR decrease during the preparation process of said polyolefin composition and/or during the storage thereof, can be markedly reduced or even avoided. Thus in this embodiment of the invention, the storage life of said polyolefin composition may be prolonged considerably compared to prior art.

Said silane-moieties of base polymer (A) of component (i) of polyolefin composition are preferably silane-crosslinkable.

Said polyolefin composition as defined above or below comprises preferably
- 20 to 98 wt% of said polymer component (i) bearing silane-moieties,
- 2 to 50 wt% of said polyolefin component (ii) of olefin with 3 or higher carbon atoms, and
- 0 to 50 wt% of said optional filler (iii),
based on the total amount of said polyolefin composition.
The "total amount" or "amount" of said polyolefin composition as used herein above and below is 100 wt%.

In one embodiment of said polyolefin composition said filler (iii) is not present said composition. Then the amount of said polymer component (i) bearing silane-moieties is typically between 40 to 98 wt%, preferably between 50 to 97 wt%, such as between 55 to 95 wt%, more preferably 80 to 95 wt%, of the amount of said polyolefin composition of the invention. If said filler (iii) is not present, then the amount of said polyolefin component (ii) is typically between 2 to 60 wt%, preferably between 3 to 50 wt%, such as between 5 to 45 wt%, more preferably between 5 to 20 wt%, of the amount of said polyolefin composition.

In a preferred embodiment of said polyolefin composition said filler (iii) is present, whereby the amount of said polymer component (i) is typically between 20 to 90 wt%, preferably 30 to 80 wt%, more preferably 40 to 70 wt%, or it may be even 45 to 60 wt%, of the amount of said polyolefin composition. Preferably, when said filler (iii) is present, then the amount of said polyolefin component (ii) is typically 2 to 45 wt%, preferably between 2 to 40 wt%, more preferably between 3 to 30 wt%, more preferably between 5 to 20 wt%, of the amount of said polyolefin composition. The amount of said filler (iii) is not limited and can vary within a wide range depending on the filler, as well as the effect desired to said polyolefin composition or to an end product thereof, as well known in the art. As a non-limiting preferable example the amount of said filler (iii) is between 5 to 50 wt%, typically between 10 to 45 wt%, such as between 15 to 45 wt%, or in some embodiments it may be preferable to have even 20 to 45 wt%, preferably 25 to 45 wt%, more preferably 30 to 45 wt%, of the amount of said polyolefin composition.

Said polyolefin composition contains of from 0.001 to 12 mol%, preferably of from 0.01 to 4 mol%, most preferably of from 0.1 to 1.6 mol%, of said functional silane-moieties, i.e. Si(Y)_{3-q}, based on the amount of the two polymer components, i.e. polymer component (i) and polyolefin component (ii), present in said polyolefin composition. In embodiments, wherein high crosslinking level is desired, said polyolefin composition contains preferably of from 0.2 to 1.6 mol%, and even as high as of from 0.3 to 1.6 mol%, of said functional silane-moieties, i.e. Si(Y)_{3-q}, based on the combined amount of the polymer component (i) and polyolefin component (ii).The amount of functional silane-groups as defined above and present in said polyolefin composition of the invention is not limited and depends on the effect of said functional silane-groups desired to said polyolefin composition and/or to an end product thereof.
More preferably said functional silane-groups are those introduced to said polyolefin composition during the preparation of said polymer component (i), optionally in the presence of other components of said polyolefin composition of the invention, preferably in the presence of said polyolefin component (ii) as described later below.

The density of said polyolefin composition of the invention is not limited and can vary depending on the end application. Said polyolefin composition for W&C applications may preferably have a density of less than 970 kg/m³, preferably between 870 to 90 kg/m³, when said filler (iii) is not present. Most preferably, said filler (iii) is present, whereby said polyolefin composition has a density of at least 950 kg/m³, and more preferably up to 1150 kg/m³.

The melt flow ratio, MFR, of said polyolefin composition of the invention is also not limited and can vary within a broad range depending on the end application. Most preferably, particularly for W&C applications, said polyolefin composition comprises said filler (iii) and the lower limit of MFR₂₁ of said polyolefin composition is of at least 0.01 g/10 min, such as of at least 0.1 g/10 min, suitably of at least 0.5 g/10 min, preferably of at least 1.0 g/10 min, more preferably of at least 1.5 g/10 min, and the upper limit can be selected depending on the desired application and may be e.g. of up to 200 g/10 min, e.g. of up to 100 g/10 min, more preferably is within the ranges of from 2.0 to 50 g/10 min, more preferably of from 2.0 to 20 g/10 min, and more preferably of 2.5 to 17 g/10 min, when measured according to ISO 1133 at 190°C using 21.6 kg load.

Within the above given MFR range including the preferable ranges, preferably (i) MFR, when measured according to ISO 1133 at 190°C using a load of 2.16 kg or of 21.6 kg, of said polyolefin composition is changed of less than ±60%, preferably of less than ±30 %, more preferably of less than ±27 %, in some embodiments even of less than ±15%, from the initial MFR thereof, after a storage period of 3 months, preferably of 6 months, when stored in a sealed container in a room which has an atmospheric pressure, temperature of 23°C and relative humidity of 55%. The sealed container was a plastic bag made of film structure which had a WVTR of less than 0.5 g H₂O/m²/24h, when measured in an atmosphere having a temperature of 38°C and a relative humidity of 90% (standard pressure). In the test of this application said bag was made from Al-laminated polyethylene film. When said filler (iii) is present, as preferred, then typically the above defined MFR₂₁ with load of 21.6 kg is measured

It is preferred that said MFR of said polyolefin composition is changed of less than ±30 %, more preferably of less than ±27 %, in some embodiments even of less than ±15%, from the initial MFR thereof, after a storage period of 9 months, when stored as defined above.

It is even more preferred that said polyolefin composition comprises a filler (iii) and said MFR₂₁ thereof is changed of less than ±27 %, even preferably of less than ±15%, from the initial MFR₂₁ thereof, after a storage period of 9 months, when stored as defined above.

The above definition (i) is relative. It is determined as follows: The MFR of said polyolefin composition can be measured from a sample which can be any of pellets, granules, powder or similar consisting of said polyolefin composition of the invention. The sample is taken from an outlet of a production line, e.g. a mixer or pelletising extruder of the preparation process of said polyolefin composition, which outlet is evident for as skilled person. Before the MFR determination the obtained sample is put to an above given storage conditions within 5 hours after said sampling and said initial MFR is determined from such stored sample within 24 to 48 hours after said sampling from said outlet.

### Polymer component (i)

The amount of functional silane-groups in said polymer component (i) is not limited and depends on the desired effect provided by said functional silane-groups. Preferably, said functional silane-groups that are present in the final polyolefin composition are introduced during the preparation process of said polymer component (i) to provide the above defined amount of functional silane-groups to said polyolefin composition of the invention.

Said polymer component (i) may be obtainable by any suitable means. In a preferred embodiment, said polymer component (i) of said polyolefin composition of the invention is obtainable by silane-grafting or silane-copolymerisation, most preferably by silane-grafting, as described further below including said further preferred subgroups thereof.

Said base polymer (A) of said polymer component (i), which bears said silane-moieties, is preferably a branched low density polyethylene homo- or copolymer produced in high pressure by radical polymerisation and referred herein as LDPE homo- or copolymer (A_{1.1}), more preferably an LDPE copolymer (A_{1.1.b}), even more preferably an LDPE copolymer of ethylene with at least polar comonomer(s) (A2), which bears silane-moieties and which is further described later below by means of preferred subgroups thereof. Said polymer (A) component (i), which bears said silane-moieties, are referred herein also as silane-functionalised polymer (A) component (i), and said preferable subgroups thereof, in increasing preference order, as silane-functionalised polymer (A_{1.1}), (A_{1.1.b}), and most preferably (A2) component (i).

When said silane-moieties of polymer component (i) are introduced by copolymerisation into said base polymer (A), then said polymer (A) or a preferable subgroup thereof, as mentioned above, is actually a copolymer obtainable by copolymerising said monomer units of said base polymer, preferably olefin units, more preferably ethylene units, with silane comonomer units, and in case of preferred base copolymers (A_{1.1}) and (A2)/(A3) with other comonomer units of said base polymer.

In general, it is understood herein above and below that "polar comonomer" is other than "silane comonomer". Said polar groups of said polar comonomer are preferably selected from siloxane, amide, anhydride, carboxylic, carbonyl, hydroxyl, ester and epoxy groups.

In said preferred subgroup of silane-functionalised LDPE copolymer of ethylene with at least polar comonomer(s) (A2), the content of said polar comonomer(s) is not limited and may be e.g. up to 70 wt%, preferably 0.5 to 35 wt%, more preferably 1.0 to 30 wt%, of the amount of said base polymer (A) of said polymer component (i).

In preferable subgroup of said silane-functionalised LDPE copolymer of ethylene with at least polar comonomer(s) (A2) component (i),
said (i) copolymer component comprises polar comonomer units in an amount:
(a) of at least 7.0 mol%, preferably of at least 7.5 mol% , more preferably of from 8 to 15 mol%, based on the total moles of polymerisable monomers of said base LDPE copolymer (A2), or,
(b) in an amount of at least 20 wt%, such as at least 25 wt%, preferably at least 26 wt% more preferably from 27 to 35 wt%, based on said base LDPE copolymer (A),
and is referred herein as silane-functionalised LDPE copolymer of ethylene with at least polar comonomer(s) (A3). Both mol% and wt% can be used for defining the preferable embodiment of high comonomer content. This preferable embodiment of polyolefin composition comprising said silane-functionalised LDPE copolymer of ethylene and at least polar comonomer(s) (A2) component (i), more preferably said silane-functionalised LDPE copolymer of ethylene and at least polar comonomer(s) (A3) component (i) is preferably used in cable, such as in semiconductive cable, applications and particularly in case of such high polar comonomer contents, in strippable semiconductive layers, as described further below including said further preferred subgroups thereof.

Preferably, said polymer component (i) consists of one polymer (A) which bears silane-moieties.

Most preferably said polyolefin composition comprises said silane-functionalised polymer (A) component (i), wherein said functional silane-groups are incorporated by grafting silane compounds to said base polymer (A) as described further below including said further preferred subgroups thereof, and referred herein as silane-grafted polymer component (i).

### Silane-grafted polymer component (i)

Accordingly, in said preferred silane-grafted polymer component (i) of said polyolefin composition of the invention, said silane-moieties are introduced by grafting silane moieties to said base polymer (A), preferably to said LDPE homo- or copolymer (A_{1.1}), more preferably to said LDPE copolymer (A_{1.1.b}), more preferably to said LDPE copolymer of ethylene with at least polar comonomer(s) (A2), more preferably to said LDPE copolymer of ethylene with at least polar comonomer(s) (A3), as defined above and further below including said further preferred subgroups thereof and which are referred herein also as silane-grafted polymer (A) component (i), and as preferable, in increasing preference order, silane-grafted, LDPE homo- or copolymer (A_{1.1}), LDPE copolymer (A_{1.1.b}), LDPE copolymer of ethylene and at least polar comonomer(s) (A2), and most preferable LDPE copolymer of ethylene and at least polar comonomer(s) (A3), component (i).

### Preparation of said silane-grafted polymer component (i)

Said silane-grafted polymer component (i) is preferably obtainable by grafting via radical reaction silane compounds (B) to said base polymer (A).

The "grafting" or "silane-grafting" of a polymer as used herein is thus a well known modification method and means introducing compounds to the polymer chain (backbone and/or side chain) by radical reaction, i.e. by reacting a polymer with a silane compound(s). Such grafting technique is well described in the literature; reference is made i.a. to US 3,646,155 and US 4,117,195.

Preferably said silane-grafted polymer component (i) is obtainable by radical reaction using one or both of an irradiation or a free radical generating agent including any conventional inorganic or organic free radical generating agents.

Said silane-grafted polymer component (i) as defined above is preferably prepared using a silane-graftable polymer composition (C) which also forms part of the invention and which comprises
- at least one base polymer (A) component, which is referred also as "polymer (A)" - at least one unsaturated silane compound (B), referred also as "silane compound (B)" and
- at least one free radical generating agent, which is also referred as "initiator". Said silane-graftable polymer composition (C) is referred herein as "composition (C)".
In a preferred embodiment thereof, said compostion (C) further comprises said polyolefin component (ii) as defined above and further below including said further preferred subgroups thereof, which preferred composition (C) is referred herein as silane-graftable polymer composition (C1), and also as "composition (C1)".

Said silane-graftable polymer composition (C), preferably, said preferred composition (C1), is highly feasible for producing said silane-grafted polymer component (i) of said polyolefin composition as defined above including said further preferred subgroups thereof.

Also a preparation process for producing said silane-grafted polymer component (i) as defined above is provided, wherein said process comprises a step of mixing at least said base polymer (A), said silane compound (B) and said initiator together to form a silane-graftable polymer composition (C), preferably mixing at least said base polymer (A), said silane compound (B), said polyolefin component (ii) and said initiator together to form a silane-graftable polymer composition (C1), and a step of grafting the obtained composition (C), preferably the obtained composition (C1), and recovering the obtained silane-grafted polymer (A) component (i). The grafting step is carried out under silane-grafting conditions. Grafting naturally occurs due to reaction of said base polymer (A) and silane compound (B) initiated by said initiator, and when grafting said preferable composition (C1), in the presence of said polyolefin component (ii). Also further component(s) may be present during said grafting step.

Said silane-grafting step can be effected according or analogously to grafting processes and conditions that are well known in the art and include i.a. melt mixing in any compounding equipment, i.e. mixing device, such as a conventional single or twin screw extruder or a kneader, e.g. supplied by Buss. The grafting is typically effected above the melting point of the polymer components and below the undesired decomposition temperature of the polymer material and/or further components present in said mixture during said grafting process. As a non-limiting example, the grafting step is preferably carried out under mixing and at a temperature of above 100°C, preferably of above 150°C, and e.g. below 230°C, preferably in the range of 150 to 190°C, depending on the used polymer material and optional further components.

Said base polymer (A) of composition (C), preferably of composition (C1), and above and below preferable subgroups thereof, is highly preferable for preparing said silane-grafted polymer component (i), of said polyolefin composition, but it is also to be understood to be preferable polymer (A) for any of said polymer component (i) bearing silane-moieties that is usable in the present invention.

Accordingly, said polymers (A) that are suitable for said composition (C), preferably for said composition (C1), and thus for producing said silane-grafted polymer component (i) of said polyolefin composition, are referred herein shortly "preferable for C/C1/polymer component (i)" and include any suitable polymers that are e.g. commercially available polymers or they can be prepared in a known manner according to or analogously to polymerisation process described in the literature.

The properties of said polymer (A) for C/C1/polymer component (i) may vary considerably depending on the end application of said polyolefin composition. Melt flow ratio, MFR₂, of said polymer (A) may typically be of at least 0.01 g/10 min, suitably of at least 0.5 g/10 min, preferably of at least 1.0 g/10 min, more preferably of at least 2.0 g/10 min, even more preferably of at least 3.0 g/10 min, when measured according to ISO1133, 2.16 kg load, 190°C. The upper limit MFR₂ of said polymer (A) is not limited and may be e.g. of up 50 g/10 min , such as of up to 30 g/10 min, preferably of up to 20 g/10 min, more preferably of up to 15 g/10 min, when determined as defined above.

The density of preferable polymer (A) for C/C1/polymer component (i) may typically be e.g. less than 980 kg/m³, preferably from 900 to 960 kg/m³, more preferably between 910 to 958 kg/m³.

Polymers (A) are low density polyethylene (LDPE) homopolymer or copolymer, which is referred herein as LDPE homo- or copolymer (A_{1.1}), or 2) a linear polyethylene homo- or copolymer produced by low pressure polymerisation using a coordination catalyst, i.e.linear low density polyethylene (LLDPE), medium density polyethylene (MDPE) or high density polyethylene (HDPE), which is referred herein as linear PE homo- or copolymer (A_{1.2}).

Accordingly, said polyethylene (A1) as defined above suitable as said polymer (A) for producing said silane-grafted polymer component (i) of the invention can be said linear PE homo- or copolymer (A_{1.2}), which is LLDPE, MDPE or HDPE polymer. They can be produced in a known manner in a single or multistage processes e.g. as slurry polymerisation, a solution polymerisation, a gas phase polymerisation, and in case of multistage process in any combination(s) thereof, in any order, using one or more of e.g. Ziegler-Natta catalysts, single site catalysts, including metallocenes and non-metallocenes, and Cr-catalysts. The preparation of linear ethylene polymer is and the used catalysts are very well known in the field, and as an example only, reference is made i.a. to a multistage process described in EP517868.

Said polyethylene (A1) as defined above is preferred as said base polymer (A) for C/C1/polymer component (i) and is more preferably said LDPE homo or copolymer (A_{1.1}) which may optionally have an unsaturation that can preferably be provided by copolymerising ethylene with at least one d) polyunsaturated comonomer as defined above and/or by using a chain transfer agent, such as propylene. Such polymers are well known and described e.g. in WO 93/08222, EP1695996 or WO2006/131266. Typically said unsaturated polyolefins have a double bond content of more than 0.1 double bonds/1000 C-atoms.

Said preferable LDPE homo or copolymer (A_{1.1}) subgroup of said ethylene polymers (A1), as defined above as preferred for C/C1/polymer component (i), is more preferably an LDPE copolymer of ethylene with one or more comonomers which are preferably selected from a) C3 or higher olefin comonomer(s), preferably (C3-C30)alpha-olefin comonomer(s), more preferably (C3-C 12)alpha-olefin comonomer(s), b) polar comonomer(s), c) silane comonomer(s) or d) polyunsaturated comonomer(s), e.g. a comonomer with at least two double bonds, such as diene comonomers, or a mixture of said (a)-(d) comonomers, and which LDPE copolymer may optionally have a further unsaturation provided by using a chain transfer agent, such as propylene, and which LDPE copolymer is referred herein as LDPE copolymer (A_{1.1.b}). Such comonomers a)-d), as well as chain transfer agents are well known in the art.

Most preferred polymer (A) for C/C1/polymer component (i) is said LDPE copolymer (A_{1.1.b}), more preferably is a LDPE copolymer (A_{1.1.b}), wherein the comonomer is selected from one or more of b) polar comonomer(s) and may optionally comprise an unsaturation provided preferably by copolymerising ethylene with at least one (d) polyunsaturated comonomer(s) and/or by using a chain transfer agent, such as propylene, as defined above, which LDPE copolymer is referred herein as LDPE copolymer of ethylene with at least polar comonomer(s) (A2), and is most preferably an LDPE copolymer of ethylene and at least (b) polar comonomer(s). More preferably, said polar (b) comonomer(s) in said LDPE copolymer of ethylene with at least polar comonomer(s) (A2) for C/C1/polymer component (i) is/are selected from: (a) vinyl carboxylate esters, such as vinyl acetate and vinyl pivalate, (b) (meth)acrylates, such as methyl(meth)acrylate, ethyl(meth)acrylate, butyl(meth)acrylate and hydroxyethyl(meth)acrylate, (c) olefinically unsaturated carboxylic acids, such as (meth)acrylic acid, maleic acid and fumaric acid, (d) (meth)acrylic acid derivatives, such as (meth)acrylonitrile and (meth)acrylic amide, or (e) vinyl ethers, such as vinyl methyl ether and vinyl phenyl ether. More preferably, said LDPE copolymer of ethylene with at least polar comonomer(s) (A2) for C/C1/polymer component (i) is a LDPE copolymer of ethylene with one or more of vinyl esters of monocarboxylic acids having 1 to 4 carbon atoms, such as vinyl acetate, or of (meth)acrylates of alcohols having 1 to 4 carbon atoms, or of a mixture thereof, preferably of vinyl acetate, methyl (meth)acrylate, ethyl (meth)acrylate or butyl (meth)acrylate. The preferred subgroup of said LDPE copolymer of ethylene with at least polar comonomer(s) (A2) of C/C1/polymer component (i) is a LDPE copolymer of ethylene with at least vinyl acetate, LDPE copolymer of ethylene with at least methyl acrylate, a LDPE copolymer of ethylene with at least ethyl acrylate or a LDPE copolymer of ethylene with at least butyl acrylate, or any mixture thereof.

The term "(meth)acrylic acid" and "(meth)acrylate" are intended to embrace both acrylic acid and methacrylic acid and, respectively "methacrylate" and "acrylate".

The content of polar comonomer in said LDPE copolymer of ethylene with at least polar comonomer(s) (A2) as defined above, that is most preferable as said polymer (A) for C/C1/polymer component (i), is not limited and may be of up to 70 wt%, preferably of 0.5 to 35 wt%, more preferably of 1.0 to 35 wt%, of the total amount of said LDPE copolymer. In some end applications, such as in highly preferable semiconductive cable applications ,of said polyolefin composition, high polar comonomer content is preferred, whereby the content of polar comonomer units can be of at least 20 wt%, such as at least 25 wt%, preferably at least 26 wt% more preferably from 27 to 35 wt%, based on said LDPE copolymer (A2). Said preferred high polar comonomer content, when expressed using mol-%, present in said LDPE copolymer of ethylene with at least polar comonomer(s) (A2) can then be of at least 7.0 mol%, preferably of at least 7.5 mol% , more preferably of from 8 to 15 mol%, polar comonomer units based on the total moles of polymerisable monomers of said LDPE copolymer (A2).

High pressure polymerisation for producing said LDPE homo or copolymer (A_{1.1}) and the subgroups (A_{1.1.b}), (A2) and, respectively, (A3) thereof, as defined above, is a well known technology in the polymer field and can be effected in a tubular or an autoclave reactor, preferably, in a tubular reactor. Further details about high pressure radical polymerisation are given in WO 93/08222. The polymerisation of the high pressure process is generally performed at pressures of from 1200 to 3500 bar and temperatures of from 150 to 350°C.

Naturally any mixtures of polymers (A) can also be used in said silane-graftable polymer composition C/C1/polymer component (i). Preferably, composition (C), preferably said composition (C1), and polymer component (i) of the invention comprises, preferably consists of one polymer (A) which bears silane-moieties.

Said unsaturated silane compound (B) that is preferable for C/C1/polymer component (i), as defined above, is preferably a vinyl-functional silane compound, most preferably an unsaturated silane compound represented by the formula

R¹SiR²_{q}Y_{3-q} (I)

wherein
R¹ is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group and
q is 0, 1 or 2.
Special examples of the unsaturated silane compound (I) are those wherein R¹ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and R², if present, is a methyl, ethyl, propyl, decyl or phenyl group.
A preferred unsaturated silane compound (I) is represented by the formula

CH₂=CHSi(OA)₃ (Ia)

wherein A is a hydrocarbyl group having 1-8 carbon atoms, preferably 1-4 carbon atoms. The preferred compounds of formula (Ia) as said silane compound (B) for the present invention are vinyl trimethoxysilane, vinyl bismethoxyethoxysilane, vinyl triethoxysilane, gamma-(meth)acryloxypropyltrimethoxysilane, gamma(meth)acryloxypropyltriethoxysilane, and vinyl triacetoxysilane, more preferably vinyl trimethoxysilane or vinyl triethoxysilane.

Said base polymer component (A), said silane compound (B) and said optional polyolefin component (ii) in said composition (C), preferably in said composition (C1), as defined above, preferably for producing said silane-grafted polymer component (i), correspond to and can be calculated by a skilled person based on the amounts of polymer component (i), polyolefin component (ii) and on the amount of silane-moieties that are to be provided for the final polyolefin composition as defined above and below including said further preferred subgroups thereof. Preferably said silane compound (B) is added in amount of 0.001 to 15 wt%, more preferably of from 0.01 to 5.0 wt%, most preferably of from 0.1 to 2.0 wt%, most preferably of from 0.4 to 2.0 wt%, most preferably of from 0.6 to 2.0 wt%, based on the weight of polymer component (A).

Said initiator of said silane-graftable polymer composition (C), preferably of composition (C1), of the invention preferable for producing said silane-grafted polymer component (i) for said polyolefin composition, can be any suitable agent for initiating the grafting reaction. Preferable initiators contain at least one -O-O- bond or at least one - N=N- bond. Non-limiting examples of preferable initiator are organic peroxides, such as di-tert-amylperoxide, 2,5-di(tert-butylperoxy)-2,5-dimethyl-3-hexyne, 2,5-di(tertbutylperoxy)-2,5-dimethylhexane, tert-butylcumylperoxide, di(tert-butyl)peroxide, dicumylperoxide, bis(tert-butylperoxyisopropyl)benzene, butyl-4,4-bis(tert-butylperoxy)-valerate, 1,1-bis(tert-butylperoxy)-3,3,5-trimethylcyclohexane, tert-butylperoxybenzoate, dibenzoylperoxide, 2,5-dimethyl-2,5-di(benzoylperoxy)hexane, 1,1-di(tertbutylperoxy)cyclohexane, 1,1-di(tert-amylperoxy)cyclohexane, or any mixtures thereof. Of these dicumylperoxide is one preferable peroxide for the present invention.

The amount of said initiator used in said composition (C), preferably in said composition (C1), as defined above, preferably for producing said silane-grafted polymer component (i) for said polyolefin composition, depends on the amount of said silane compound (B) desired to be incorporated to said silane-grafted polymer component (i) and, respectively, to said polyolefin composition of the invention, and can be determined by a skilled person. The amount of said initiator may preferably vary in the range of 0.05 to 0.5 mol% based on the total polymerisable monomers of said base polymer (A) and total moles of said silane compound (B).

### Silane-copolymer component (i)

Although the silane-grafted polymer component (i) is preferred, said polyolefin composition includes also i.a. an embodiment, wherein said (i) polymer component bearing silane-moieties is a copolymer of monomer with at least one silane comonomer and optionally with one or more further comonomer. Said (i) polymer component of this further embodiment is referred herein as silane-copolymer component (i). Said silane-copolymer component (i) is preferably said base polymer (A), as defined above and below including said further preferred subgroups thereof, which comprises additionally one or more silane comonomer(s). Said silane comonomer is preferably said silane compound (B), preferably said unsaturated compound of formula I, more preferably of formula Ia, as defined above including said further preferred subgroups thereof.

Preferably, said silane-copolymer component (i) is as said silane-functionalised polymer (A) component (i) as defined above including said preferable subgroups thereof, which comprises further said silane comonomers as defined above including said further preferred subgroups thereof.

### Preparation of said silane-copolymer component (i)

Said silane-copolymer component (i) as said polymer component (i) of said polyolefin composition is obtainable by polymerising monomer units, such as an olefin, more preferably ethylene, preferably with one or more (b) polar comonomer(s), as defined above for polymer (A) and preferred subgroups thereof for preferred C/C1/polymer component (i), and with at least one silane comonomer, which is preferably said silane compound (B), preferably said unsaturated silane-compound of formula I, more preferably of formula Ia, under "Preparation of said silane-grafted polymer component (i)"as defined above including said further preferred subgroups thereof, and in amounts of said silane comonomer(s) and any polar comonomer(s), if present, which correspond to and can be calculated based on the amounts given therein.

### Polyolefin component (ii)

Said (ii) polymer of olefin having at least 3 carbon atoms of said polyolefin composition of the invention as defined above is an olefin homopolymer or copolymer, wherein said olefin has at least three carbon atoms. Said polyolefin component (ii) can be a linear, straight or branched chain, olefin or a cyclic olefin, and which can have at least one unsaturated bond, such as a double bond, or which can be polyunsaturated, such as a diene or polyene, olefin, preferably a linear, straight or branched chain, (C3-C50)alpha-olefin, preferably (C3- C20)alpha-olefin, more preferably an alpha-olefin having 3 to 12 carbon atoms.

In case of olefin copolymers as said polyolefin component (ii), said C3 or higher olefin may be copolymerised with one or more comonomer(s) other than said C3 or higher olefin, which can be linear, straight or branched chain, comonomer(s) or cyclic comonomer(s), and which can have at least one unsaturated bond, such as double bond, or which can be polyunsaturated, such as a diene or polyene, comonomer(s). Preferably, said comonomer(s) are olefins, preferably ethylene or (C3-C50)olefins, such as ethylene or (C3-C20)alpha-olefins, more preferably ethylene or (C3-C12)alpha-olefins, such as ethylene, butene, hexene, heptene, octene or decene.

Preferred polyolefin component (ii) of said polyolefin composition include homopolymers of propylene, random copolymers of propylene or heterophasic copolymers of propylene, as well as homo- or copolymers of butene, which all are very well known in the polymer field.
In a preferable embodiment said polyolefin component (ii) is selected from propylene homopolymers, random propylene copolymers or heterophasic propylene copolymers, or from mixtures thereof Said heterophasic propylene copolymer comprises a matrix phase which can be a propylene homopolymer or a propylene copolymer, and an elastomeric phase of propylene copolymer, also known as rubber part, which is dispersed in said matrix phase. The comonomer used in said random propylene copolymer and in said elastomeric propylene copolymer phase, and optionally in said random propylene copolymer matrix, of a heterophasic propylene copolymer as polyolefin component (i) is preferably ethylene or (C4-C20)olefin, even more preferably ethylene or (C4-C 12)alpha-olefin, such as ethylene, butene, pentene, hexene, heptene, octene, of decene, or any mixture thereof, preferably ethylene and/or butene.

Said random propylene copolymer as said polyolefin component (ii) of the invention contains preferably conventionally used amounts of comonomer, for example up to 30 wt% of the amount of said polyolefin component (ii), e.g. between 0.5 to 20wt%, preferably 1.0 to 10 wt%, more preferably between 2.0 to 7 wt%, even more preferably 2.5 to 5 wt%, based on the amount of said polyolefin component (ii). The xylene solubles content (wt%) of said random propylene copolymer as said polyolefin component (ii) is preferably of up to 20 wt%, preferably of up to 15 wt%, e.g. 0.5 to 10 wt%, based on the amount of said polyolefin component(ii).
Said homopropylene component as said polyolefin component (ii) of said polyolefin composition of the invention has typically a XS (in wt%) e.g. of below 5 wt%, such as 0.1 to 3 wt%, based on the amount of said polyolefin component (ii).

Said heterophasic propylene copolymer as said polyolefin component (ii) comprises said matrix phase of propylene homo- or copolymer of up to 95 wt%, preferably of from 20 to 90 wt%, said elastomeric propylene copolymer phase of up to 80 wt%, preferably of from 10 to 40wt%, based on the amount of said heterophasic propylene copolymer. In case said matrix phase of said heterophasic propylene copolymer is a random propylene copolymer, then the comonomer content and XS (wt%) content of said matrix phase is preferably as defined above for said random copolymer as said polyolefin component (ii). In case said matrix phase is a propylene homopolymer, then said XS (wt%) content is preferably as defined above for said propylene homopolymer component as said polyolefin component (ii). Said heterophasic propylene copolymer as said polyolefin component (ii) has typically a total xylene solubles (wt%) of up to 50 wt%, preferably of up to 30 wt%, based on the amount of said polyolefin component (ii).

Suitable homo, random and heterophasic polymers of propylene (PP) as said polyolefin component (ii) of said polyolefin composition of the invention are e.g. well known and commercially available or, alternatively, may be produced using e.g conventional polymerisation processes which are well documented in the literature. Accordingly also the polypropylene polymer usable in the present invention may be produced in a single- or multistage process e.g. as bulk polymerisation, gas phase polymerisation, slurry polymerisation, solution polymerisation, and in case of a multistage process in any combination(s) thereof, in any order, using conventional catalysts including Ziegler-Natta and single site, such as metallocene catalysts. In case of heterophasic copolymer of propylene the matrix of propylene homopolymer or random copolymer can be produced e.g. in a single stage or as a multistage process described above and the elastomeric (rubber) part of the propylene copolymer can be produced as an in-situ polymerisation e.g. in a separate reactor, e.g. gas phase reactor in the presence of the matrix polymer produced in the previous stage. Alternatively the elastomeric copolymer of propylene part can be mechanically compounded to the matrix phase material, as well known in the art. For suitable polypropylenes as said (ii) component and the preparation processes thereof, reference is made to e.g. Nello Pasquini (Ed.) Polypropylene Handbook, Hanser, Munich, 2005, pages 15 - 141.

Naturally, said polyolefin composition of the invention may comprise more than one said polyolefin component (ii) as defined above, preferably comprises one polyolefin component (ii) which comprises, preferably consists of, one or more, preferably one of a propylene homopolymer, random propylene copolymer or a heterophasic propylene copolymer, as defined above.

Moreover, said polyolefin of the invention includes also an embodiment wherein said polyolefin component (ii) is treated by radical reaction after polymerisation process thereof, preferably using a free radical generating agent(s) for further modifying the properties, such as rheological properties, thereof.

Preferably said polyolefin, preferably said polypropylene as defined above, component (ii) of said polyolefin composition has a melting temperature of at least 65 °C, such as of at least 80°C, preferably of at least 100°C, more preferably of at least 120°C, e.g. of up to 200°C, preferably of between 130°C to 190°C.

MFR₂ (ISO 1133 at 230°C, 2.16 kg load) of said polyolefin, preferably said polypropylene as defined above, component (ii) of said polyolefin composition is typically of at least 2.0 g/10 min, preferably of at least 3.0 g/10 min and ofup to 150 g/10 min, preferably of from 3.0 to 50 g/10 min, more preferably of from 3.0 to 30 g/10 min.

### Optional filler (iii) of the invention

Said polyolefin composition of the invention may optionally comprise one or more filler(s) (iii) including any organic and inorganic solid compound which are understood and conventionally used in prior art within the meaning of "filler". In one embodiment of said polyolefin composition said filler (iii) is at least, preferably consists of, a carbon black (CB).
As mentioned above, high filler content can be incorporated into the polyolefin composition due to the highly beneficial rheological properties of said combination of said components (i) and (ii).

In said preferred embodiment of the invention said filler (iii) is present and is a carbon black. The type and amount of said CB as said filler (iii) of the invention are not limited and can be selected depending on the end application of said polyolefin composition. Preferably said carbon black is electrically conductive.

Said carbon black as said filler (iii) of polyolefin composition has a surface area of up to 300 m²/g, preferably of up to 140 m²/g, more preferably of up to 80 m²/g, even more preferably of from 30 to 70 m²/g, most preferably of from 40 to 65 m²/g, when measured according to ASTM D 4820-99 (BET, N2 adsorption). Without binding to any theory, this preferable carbon black (iii) with specific surface area is believed to have an advantageous effect in preventing and thus decreasing scorch, i.a. premature crosslinking, which is a well known undesired phenomenon during e.g. a cable preparation process.

In a preferable embodiment of said polyolefin composition of the invention which is suitable i.a. for a semiconductive layer material of a cable, said polyolefin composition comprises a (iii) carbon black as defined above in an amount that provides a volume resistivity of less than 500000 Ω cm, preferably of less than 100000 Ω cm, when measured at 23 and/or 90 °C, to said polyolefin composition. Alternatively, when the DC volume resistivity is measured according to ISO 3915 using a crosslinked plaque, then said polyolefin composition comprises said (iii) CB in an amount that provides a volume resistivity of less than 5000 Ω cm, preferably of less than 1000 Ω cm, such as of less than 500 Ω cm, more preferably of less than 100 Ω cm, when measured at 23 °C, or of less than 50000 Ω cm, preferably of less than 10000 Ω cm, such as of less than 5000 Ω cm, more preferably of less than 1000 Ω cm, when measured at 90 °C, to said polyolefin composition.

The preferred (iii) CB amounts are as given above or in claims in relation to said optional filler (iii) content of said polyolefin composition of the invention.

The carbon black as said filler (iii) of the invention may have an arithmethic mean primary particle size of at least 20 nanometers, preferably at least 29 nanometers, up to 70 nanometers, when measured using transmission electron microscopy as described in ASTM D 3849-95a, dispersion procedure D.

Further preferably, said carbon black as said filler (iii) of the invention has a DBP (dibutyl phthalate) absorption number of from 80 to 300 cm³/100g, preferably less than 180 cm³/100g, when measured according to ASTM D 2414-06a.

Non-limiting examples of carbon blacks as said filler (iii) of the invention are e.g. carbon blacks grades described with ASTM Nxxx codes, Ensaco black, supplied e.g. by Timcal, Timcal acetylene black, furnace black and Ketjen black. Preferable carbon blacks as said filler (iii) of the invention are Ensaco black supplied e.g. by Timcal, furnace carbon black. Examples of CB as said filler (iii) are disclosed e.g. in WO 98/014516 (= EP 929606). Other suitable carbon blacks for the present invention are also those described e.g. EP1065672.

### Further components of said polyolefin composition of the invention

Said polyolefin composition of the invention may additionally comprise further components such as further polymers or, preferably, additives, such as at least antioxidant(s). Said antioxidant is preferably a compound, or a mixture of such compounds, which compound is neutral or acidic, and can be a diphenyl amine compound, a quinoline compound, a compound which comprises a sterically hindered phenol group or a compound which comprises aliphatic or aromatic sulphur group(s). Particularly suitable antioxidants for said polyolefin composition of the invention are disclosed i.a. in WO2005003199A1 and EP 1 254 923.

As further non-limiting examples additives, such as one or more of stabilisers, e.g. voltage stabilisers, processing aids, scorch retardants, crosslinking boosters or water tree retardants, lubricants or any mixtures thereof, can be mentioned.
The additives can be used i.a. in conventional amounts and in a manner well known in the art. Preferably, the antioxidant is preferably present in the composition in an amount of from 0.01 to 3 wt%, more preferably 0.05 to 2 wt%, and most preferably 0.08 to 1.5 wt%, based on the amount of said polyolefin composition of the invention.

Preferably, said polyolefin composition of the invention is avoid of, i.e. does not contain, any metal hydroxide comprising additives, such as flame retardants which comprise a metal hydroxide.
Preferably polymer components present in said polyolefin composition consist of said polymer component (i) and polyolefin component (ii) as polymer components, i.e. no other polymer components are present, and further comprises said optional filler (iii) and optional additives, preferably further comprises said filler (iii) and at least an antioxidant.

### Preparation process of said polyolefin composition ("PROCESS")

Furthermore, the invention provides a process for producing said polyolefin composition as defined above or below in claims, wherein said process comprises a step of mixing
- said polymer component (i) which is a polymer (A) bearing silane-moieties, preferably an ethylene homo- or copolymer (A1), which bears said silane-moieties,
- said polyolefin component (ii) which is a polymer of olefin having at least 3 carbon atoms, and
- said optional filler (iii), together in a mixing device, and typically recovering the obtained polyolefin composition in a conventional manner.
Said preparation process of said polyolefin composition is referred herein also as "PROCESS".

Accordingly, all or part of said components of said polyolefin composition can be added, i.e. introduced, together, at the same time, to said mixing, i.e. compounding, step of the invention, or each or part of said components can be added separately, in any addition order, in one or more subsequent addition step(s) during said mixing step.

Preferably in said PROCESS, at least said polymer component (i) is added first to said mixing step of the invention. This addition step is referred herein as a "first mixing step". In the first preferable embodiment (C) of said PROCESS at least said polymer component (i) and said polyolefin component (ii) are added together at said first mixing step of said mixing step of PROCESS.

It is evident for a skilled person that further components such as further polymers and/or additives, such as those listed above, preferably at least an antioxidant, can be added at said first mixing step and/or added at said one or more subsequent addition, i.e. mixing, steps.

Said mixing step can be carried out in any mixer, i.e. compounding device, such as a conventional extruder or mixer as described above in relation to preparation of said silane-graftable polymer composition (C), as defined above including said further preferred subgroups thereof. The mixing is effected in an elevated temperature which is above the melting temperature of the polymer components present in said polyolefin composition of the invention and preferably below an undesired decomposition of any of said polyolefin composition of the invention. The preferable mixing temperature is of above 100°C, preferably of above 150°C, typically of below 230°C, more preferably of from 150 to 190°C.

The polymer component (i) and polyolefin component (ii) can independently be prepared before the mixing step of PROCESS, or during PROCESS.

Preferably, said silane-moieties present in the final polyolefin composition of the invention are preferably introduced during PROCESS by producing said polymer component (i), more preferably by silane-grafting said functional silane-moieties to said base polymer (A) of the polymer component (i) as defined above, *in situ* during PROCESS.

Accordingly, it is preferable that PROCESS comprises a step of producing said polymer component (i) at said first mixing step or at said subsequent mixing step(s) during the mixing step of PROCESS, and optionally in the presence of one or both of said polyolefin component (ii) and said filler (iii).

In a preferred embodiment (C1) of PROCESS, said polyolefin composition is produced, which comprises said silane-grafted polymer component (i) as defined above including said further preferred subgroups thereof. More preferably, said silane-grafted polymer component (i) is produced during the mixing step of said PROCESS by adding the components of said silane-graftable polymer composition (C), as defined above, at said first mixing step and by silane-grafting under mixing said silane compound (B) to said polymer (A) in the presence of said initiator, more preferably by adding the components of said silane-graftable composition (C1) as defined above and silane-grafting said silane compound (B) to said polymer (A) in the presence of said initiator and in the presence of said polyolefin component (ii). In case of preferred composition (C1) visbreaking and/or grafting of said polyolefin component (ii) may also occur due to action of said initiator and said polyolefin component (ii), as known in the art. Said polyolefin component (ii) is preferably a propylene homopolymer, a random copolymer of propylene or a heterophasic copolymer of propylene, or any mixture thereof, as defined above including said further preferred subgroups thereof.

Said optional filler (iii) is preferably present in said polyolefin composition of the invention, and it is preferably added at said subsequent mixing step(s) during said mixing step of PROCESS.

After mixing step the obtained polyolefin composition of the invention is recovered in a known manner and preferably pelletised in a subsequent well known pelletsing step as a part of said preparation process. The obtained pellets comprising said polyolefin composition are recovered for further use in various end applications, preferable in cable production. Said pelletising step may be carried out e.g. in conventional pelletising equipment, such as extruder, as well known.

Accordingly, the invention further provides pellets comprising said polyolefin composition of the invention. The term "pellets" is well known and includes herein any powder, granule or pellet form of any shape of said polyolefin composition of the invention, and thus such powders, granules and pellets of said polyolefin composition of the invention are also covered by the present invention. Said pellets of the invention have excellent storage stability.

Alternatively, PROCESS may be carried out batch wise or in a continuous manner. Optionally, PROCESS may be integrated directly to a production line of a product which is produced using said polyolefin composition of the invention. Said production line is preferably a cable production line. In this alternative embodiment PROCESS and equipment of the invention is naturally preceded the production step and production line of said intermediate and/or end product, whereby after said mixing step the obtained polyolefin composition is further processed to an end product, such as a cable layer.

### Crosslinkable polyolefin composition

In a preferred embodiment of said polyolefin composition of the invention, said polyolefin composition is silane-crosslinkable and referred herein as silane-crosslinkable polyolefin composition.

Moreover, in said silane-crosslinkable polyolefin composition, said functional silane-group(s), i.e. silane-moieties, of said polymer component (i) are silane-crosslinkable, more preferably are silane-crosslinkable hydrolysable silane group(s).

Accordingly, a silane-crosslinkable polyolefin composition is provided which comprises said silane-crosslinkable polymer (A) component (i), said polyolefin component (ii) and said optional filler (iii).

The preferred hydrolysable silane-groups of said crosslinkable polyolefin composition of the invention comprise, preferably consist of, hydrolysable silane-groups that are provided by said silane compound (B) during the preparation of said silane-graftable polymer component (i) of said polyolefin composition, more preferably using said silane-graftable composition polymer (C), more preferably using said silane-graftable polymer composition (C1), preferably during said PROCESS, as defined above including said further preferred subgroups thereof.

The degree of crosslinking depends on and can be controlled by the amount of said compound (B) which provides said crosslinkable silane-groups. The amount of said silane compound (B) is thus not limited and can be varied depending i.a. on the degree of crosslinking which is desired for the final crosslinked polyolefin composition of the invention.

Moreover, silane-crosslinkable pellets are provided which contain said silane-crosslinkable polyolefin composition.

Said silane-crosslinkable polyolefin composition may further comprise a silane-crosslinking agent for silane-crosslinking said composition in a subsequent crosslinking step as described below. In a preferred embodiment, however, said crosslinkable polyolefin composition of the invention, which is recovered for further use, e.g. for producing products comprising said polyolefin composition, comprises no added silane-crosslinking agent, i.e. no silane-crosslinking agent is added to said composition before said recovery step, e.g. said pelletising step. Thus preferably, said pellets of said crosslinkable polyolefin composition do not comprise, i.e. are avoid of, any silane-crosslinking agent. The crosslinkable polyolefin composition of the invention is preferably brought to a silane-crosslinking contact with said silane-crosslinking agent during the actual silane-crosslinking step of said polymer composition as described later below.

### Crosslinking process of said crosslinkable polyolefin composition of the invention

The invention further provides a silane-crosslinking process for preparing a silane-crosslinked polyolefin composition of the invention, which process comprises a step of silane-crosslinking of said silane-crosslinkable polyolefin composition of the invention as defined above including said further preferred subgroups thereof, in the presence of silane-crosslinking agent. Preferably said crosslinkable silane-groups that are present in said polyolefin composition are hydrolysable silane-groups which are crosslinked by hydrolysis and subsequent condensation in the presence of a silanol-condensation catalyst and water in a manner known in the art.

Said silane-crosslinking agent suitable for silane-crosslinkable polyolefin composition of the invention is preferably a silanol condensation catalyst selected from carboxylates of metals, such as tin, zinc, iron, lead and cobalt; organic bases; inorganic acids; and organic acids, more preferably carboxylates of metals, such as tin, zinc, iron, lead and cobalt, or an organic acid , which is prefereably an organic sulphonic acid, more preferably, an organic sulphonic acid comprising 10 C-atoms or more, more preferably 12 C-atoms or more, and most preferably 14 C-atoms or more, the sulphonic acid further comprising at least one aromatic group which may e.g. be a benzene, naphthalene, phenantrene or anthracene group. In the organic sulphonic acid, one, two or more sulphonic acid groups may be present. Preferred sulphonic acid is the aromatic organic sulphonic acid which comprises the structural element:

Ar(SO₃H)ₓ (II)

with Ar being an aryl group which may be substituted or non- substituted, and x being at least 1, or a precursor of the sulphonic acid of formula (II) including an acid anhydride thereof or a sulphonic acid of formula (II) that has been provided with a hydrolysable protective group(s), e.g. an acetyl group that is removable by hydrolysis.

The preferred silanol condensation catalyst may comprise the structural unit according to formula (II) one or several times, e.g. two or three times. For example, two structural units according to formula (II) may be linked to each other via a bridging group such as an alkylene group.
Preferably, Ar is a aryl group which is substituted with at least one C₄- to C₃₀-hydrocarbyl group, more preferably C₄- to C₃₀-alkyl group.
Aryl group Ar preferably is a phenyl group, a naphthalene group or an aromatic group comprising three fused rings such as phenantrene and anthracene.
Preferably, in formula (II) x is 1, 2 or 3, and more preferably x is 1 or 2.

Furthermore, preferably the compound used as organic aromatic sulphonic acid silanol condensation catalyst has from 10 to 200 C-atoms, more preferably from 14 to 100 C-atoms.
The currently most preferred compounds are dodecyl benzene sulphonic acid and tetrapropyl benzene sulphonic acid. Preferable silanol-condensation catalyst for use in the present invention are described e.g. in those mentioned in EP736065. Alternatively, also sulphonic acid catalyst as described in EP 1 309 631 and EP 1 309 632 may be used.

The amount of said silanol condensation catalyst used in said silane-crosslinking process of the invention is typically of from 0.0001 to 6.0 wt%, more preferably of from 0.001 to 2.0 wt%, and more preferably of from 0.02 to 0.5 wt%, based on the amount of the crosslinkable polymer material.

The crosslinking step is effected in an elevated temperature. The preferable silane-crosslinking step is typically carried out below 100 °C, preferably below 80 °C, more preferably between 60 to 80°C. If said preferable silanol condensation catalyst as defined above is used, the said crosslinking step is carried out in the presence of liquid water or steam, i.e. water vapour, or both, preferably at least water vapour, as well known in the art. Said silane-crosslinking can be effected in a conventional manner using a conventional equipment.

### Crosslinked polyolefin composition of the invention

The invention thus further provides said silane-crosslinked polyolefin composition which comprises said silane crosslinked polymer component (i), as defined above or below including said further preferred subgroups thereof, and which is preferably obtainable by said silane-crosslinking process of the invention as defined above.

As already mentioned above, due to said polyolefin composition of the invention it is possible to incorporate a high amount of hydrolysable silane-groups into said (i) polymer component bearing silane-moieties during said preparation process of said hydrolysable silane-groups bearing polymer component (i), preferably of said silane-grafted polymer component (i), more preferably using said silane-graftable polymer composition (C1), as defined above including said further preferred subgroups thereof, whereby a high degree of crosslinking can be obtained, whereby said hot set elongation property of said crosslinked polyolefin composition can be measured.

Preferably said silane-crosslinked polyolefin composition of the invention has one or more of the following properties:
- feature (a) has a gel content of more than 35.0 wt%, preferably of from 37.0 wt% to 80 wt%, more preferably of less than 70 wt%, even preferably of less than 60 wt%, most preferably of between from 40.0 wt% to 50.0 wt%, when measured as defined below under "Determination methods" using a sample consisting of said silane-crosslinked polyolefin composition,
- feature (b) has a hot set elongation of less than 200%, preferably of less than 175%, preferably of less than 100%, in some embodiment may have even as low as of less than 60%, e.g. from 1 to 60%, when measured according to IEC 60811-2-1 at 200°C with a load of 0.2 MPa using a cable layer sample which has a thickness of 1.0 mm and consists of said silane-crosslinked polyolefin composition of the invention, as described below under "Determination methods", or
- feature (c) comprises a silane crosslinked polymer component (i), wherein said base polymer (A) is silane-crosslinkable silane-functionalised, preferably silane-grafted, polymer (A), as defined above including said further preferred subgroups thereof. , which is silane-crosslinked, and referred herein as silane-crosslinked silane-grafted polymer (A) component (i), and said preferable subgroups thereof.Thus in this embodiment said crosslinked polyolefin composition of the invention is according to said (1) first alternative, said (2) second alternative or said (3) third alternative, preferably according to said (1), (2) and (3) alternative, of said polyolefin composition of the invention, as defined above, which is crosslinked preferably according to said crosslinking process of the invention as defined above. The polyolefin composition of this embodiment is very advantageous for W&C applications, particularly for semiconductive cable applications.

### III. End Applications of the invention

### 1. Products

Said polyolefin composition of the invention is highly feasible in wide variety of end applications of polymers. Accordingly, the invention further provides a product which comprises the polyolefin composition of the invention as defined above and below. The present polyolefin of the invention is also highly advantageous for forming end products with high filler (iii) content.

### 1.1 Cable

In one preferable embodiment said product of the invention is a cable comprising a conductor surrounded with one or more layers, wherein at least one layer comprises said polyolefin composition of the invention as defined above, preferably at least one silane-crosslinkable layer which comprises said silane-crosslinkable polyolefin composition, as defined above or in claims below including said further preferred subgroups thereof.

The term "conductor" means herein above and below that the conductor comprises one or more wires. Moreover, the cable may comprise one or more such conductors. Preferably the conductor is an electrical conductor.

In a preferable embodiment of the cable of the invention at least one layer is an insulation layer comprising said polyolefin composition as defined above, preferably said silane-crosslinkable polyolefin, as defined above including said further preferred subgroups thereof.

In another preferable embodiment, the cable of the invention comprises a jacketing layer and optionally one or more layers selected from an insulation layer or semiconductive layer surrounded by said jacketing layer, wherein said jacketing layer comprises said polyolefin composition as defined above, preferably said silane-crosslinkable polyolefin composition as defined above including said further preferred subgroups thereof.

As one further embodiment of the cable of the invention, a low voltage cable is provided which comprises an insulation layer and optionally a jacketing layer, wherein at least said insulation layer comprises said polyolefin composition as defined above, preferably said silane-crosslinkable polyolefin composition, as defined above or in claims below including said further preferred subgroups thereof.

In preferred embodiment of said cable of the invention said cable is a semiconductive power cable which comprises a conductor surrounded by at least an inner semiconductive layer, an insulation layer and an outer semiconductive layer, in that order, wherein at least one of said inner and outer semiconductive layers, preferably at least said outer semiconductive layer, comprises said said silane-crosslinkable polyolefin composition as defined above or in claims below including said further preferred subgroups thereof, wherein said filler (iii) is present and is said electrically conductive carbon black, as defined above including said further preferred subgroups thereof. Said power cable may optionally be surrounded by a jacketing layer. More preferably at least said outer semiconductive layer of said power cable comprises said silane-crosslinkable polyolefin composition with filler (iii), wherein said (i) polymer (A) component bearing said silane-moieties is said silane-crosslinkable silane-crosslinkable silane-grafted LDPE homo- or copolymer (A_{1.1}) component (i), more preferably said silane-crosslinkable silane-grafted LDPE copolymer (A_{1.1.b}) component (i), even more preferably said silane-crosslinkable silane-grafted LDPE copolymer with at least polar comonomer(s) (A2) component (i), most preferably said silane-crosslinkable silane-grafted copolymer (A3) component (i) as defined above including said further preferred subgroups thereof More preferably, in this embodiment, said outer semiconductive layer is strippable.

In the context of the present invention, a low voltage (LV) cable is a cable operating in voltages from 500 V to 3.6 kV. A power cable is defined herein to be a cable transferring energy operating at any voltage, typically operating at voltages higher than 3.6 kV. The voltage applied to the power cable can be alternating (AC), direct (DC), or transient (impulse). In a preferred embodiment, the power cable prepared according to the present invention is operating at voltages from 3.6 kV to 36 kV and known as medium voltage (MV) power cables. Said polyolefin composition of the invention is preferably used for said LV or MV, more preferably for MV, cable applications.

### Preparation process of said 1. Product of the invention

The present invention thus further provides a process for producing a product by using said polyolefin composition as defined above or below in claims, more preferably said silane-crosslinked polyolefin composition as defined above.

### Preparation process of said 1.1 Cable

Preferably a process for producing a cable is provided which comprises steps of applying on a conductor, preferably by (co)extrusion, one or more layers comprising a polymer composition, wherein at least one layer comprises said polyolefin composition as defined above including said further preferred subgroups thereof, which most preferably comprises said silane-grafted polymer (A) component (i) as defined above including said further preferred subgroups thereof.

The term "(co)extrusion" means herein that in case of two or more layers, said layers can be extruded in separate steps, or at least two or all of said layers can be coextruded in a same extrusion step, as well known in the art.

In said process of the invention the components of a layer material can be mixed in a separate mixer before introducing to the extruder for producing said layers or added directly to an extruder and mixed therein before forming to a layer. Further components, such as additives, preferably as defined above including said further preferred subgroups thereof, can be added during the mixing step. Said mixing step is carried out at elevated temperature, which is typically above the melting point of the polymer components of the layer material, e.g. of at least 20°C, preferably of at least 25°C, above the melting point of said polymer components of the layer material, and preferably said mixing temperature is kept below 200°C. Said meltmixed layer material is then (co)extruded on a conductor in a manner very well known in the field. Conventional extruders and mixers may be used in the process of the invention.

In more preferable embodiment of said cable preparation process of the invention, said silane-crosslinkable polyolefin composition, which comprises preferably said silane-crosslinkable silane-grafted polymer (A), more preferably, in increasing preference order, (A_{1.1}), (A_{1.1b}), (A2), most preferably (A3), component (i), as defined above, is applied on a conductor for producing at least one of the one or more cable layer(s), more preferably for producing one or more of layers selected from a semiconductive layer, an insulation layer and a jacketing layer, more preferably, for producing at least said semiconductive layer, even more preferably for producing at least said outer semiconductive layer, which is preferably strippable, of a silane-crosslinkabale power cable of the invention comprising a conductor, an inner semiconductive layer, an insulation layer and an outer semiconductive layer, in that order, as defined above under "1.1 Cable".

### Crosslinking process of said 1. End product or said 1.1 Cable

The obtained preferred silane-crosslinkable product is typically crosslinked before use in the end application thereof. Accordingly, a process for crosslinking a silane-crosslinkable product is provided, wherein said product comprising said silane-crosslinkable, polyolefin composition as defined above including said further preferred subgroups thereof, is crosslinked in the presence of a silane-crosslinking agent, preferably a silanol crosslinking agent, more preferably said crosslinking agent of formula (II), as defined above.

More preferably, a process is provided for crosslinking said silane-crosslinkable cable, as defined above and under "1.1 Cable" including said further preferred subgroups thereof, and preferably obtainable by cable preparation process as defined under, wherein said process comprises a step of silane-crosslinking said silane-crosslinkable polyolefin composition, as defined above including said further preferred subgroups thereof, which is present in said one or more layers of said silane-crosslinkable cable, in the presence of a silane-crosslinking agent, preferably a silanol condensation catalyst as defined above, and water. Preferred process for crosslinking is a process for crosslinking said silane-crosslinkable semiconductive cable as defined above under "1.1. Cable" and "Preparation of said 1.1. Cable".

Said Crosslinking step of the invention can be carried out in a manner known in the art for silane-crosslinking of cable layers using e.g. a conventional silane-crosslinking equipment, e.g. a water or a steam bath. Preferably said silane-crosslinking is carried out in elevated temperatures, preferably in a temperature of below 100°C, more preferably of from 60 to 80°C, as defined above. The cable silane-crosslinking agent is typically provided by the insulation layer, if present and preferably the insulation layer is present, wherein the silane-crosslinking agent is present in said insulation layer in an amount of from 0.0001 to 6.0 wt%, preferably of from 0.001 to 2.0 wt%, more preferably of from 0.02 to 0.5 wt%, based on the amount of the insulation layer material.

Finally, the invention also provides said silane-crosslinked cable comprising at least one layer comprising said silane-crosslinked polyolefin composition, as defined above including said further preferred subgroups thereof. More preferably, said silane-crosslinked cable is a silane-crosslinked semiconductive cable surrounded by at least one semiconductive layer comprising said silane-crosslinked polyolefin composition of the invention which comprises said silane-crosslinked silane-grafted polymer component (i) as defined above, preferably under "1.1 Cable", including said further preferred subgroups thereof, and is preferably obtainable by said crosslinking process of the invention as defined above under this title.

### Determination methods

Unless otherwise stated in the description or claims, the following methods were used to measure the properties that are defined generally above and in claims, and in examples below. The samples were prepared according to given standards, unless otherwise stated.
- **Wt%:** means weight-%
- **Density:** The density was measured according to ISO 1183D and ISO 1872-2 for sample preparation.
- **Melt fow rate, MFR₂:** was determined for ethylene homo- and copolymers and for polyolefin composition according to ISO 1133 at 190°C using 2.16 kg load and for propylene homo- and copolymers according to ISO 1133 at 230°C, 2.16 kg load. **MFR₂₁:** for polyethylene according to ISO1133 at 190°C at a load of 21.6 kg.
- **WVTR:** Water vapour transmission rate was measured at 90 % relative humidity and 38 °C temperature according to the method ASTM E96.
- **XS (wt%):** Xylene cold solubles were determined for propylene homo- and copolymers at 23 °C according ISO 6427. Xylene solubles are defined as the percent by weight that stays in solution after the polymer sample is dissolved in hot xylene and the solution is allowed to cool to 23 °C.
- **Volume resistivity:** The volume resistivity of the semiconductive material is measured on crosslinked polyethylene cables according to ISO 3915 (1981). Cable specimens having a length of 13.5 cm are conditioned at 1 atm and 60 ± 2°C for 5 ± 0.5 hours before measurement. The resistance of the outer semiconductive layer is measured using a four-terminal system using metal wires pressed against the semiconductive layer. To measure the resistance of the inner semiconductive layer, it is necessary to cut the cable in two halves, removing the metallic conductor. The resistance between the conductive silver paste applied onto the specimen ends is then used to determine the volume resistivity of the inner semiconductive layer. The measurements were carried out at room temperature and 90°C.

The same procedure is used to determine the volume resistivity of compositions that have not yet been crosslinked.
- **Surface area (m²/g):** According to ASTM D 4820-99 (BET, N₂ adsorption)
- **Oil adsorption number, (Dibutyl phthalate):** DBP adsorption number of the carbon black samples was measured in accordance with ASTMD2414-06a.
- **Iodine number:** Iodine number of the carbon black samples was measured in accordance with ASTM D1510-07.
- **Average primary particle size:** ASTM D 3849-95a using electron microscopy.
- **Melting temperature, crystallization temperature (Tcr), and degree of crystallinity:** The melting temperature Tm of the used polymers was measured in accordance with ASTM D3418. Tm and Tcr were measured with Mettler TA820 differential scanning calorimetry (DSC) on 3±0.5 mg samples. Both crystallization and melting curves were obtained during 10°C/min cooling and heating scans between -10 to 200°C. Melting and crystallization temperatures were taken as the peaks of endotherms and exotherms. The degree of crystallinity was calculated by comparison with heat of fusion of a perfectly crystalline polymer of the same polymer type, e.g. for polyethylene, 290 J/g.
- **Comonomer content:** The comonomer content(s) of polymer component (i), such as polar comonomer contents of polymer component (i), were calculated based on the polymer component (i) content, and the comonomer content(s) of polyolefin component (ii) were calculated based on the polyolefin component (ii) content, as evident for a skilled person. The silane content was determined based on the combined amount of polymer component (i) and polyolefin component (ii) as described in the description using the below methodology.

**Content (mol-%) of functional silane-moieties (Si(Y)_{3-q}) using X-ray fluorescence analysis:** The pellet sample was pressed to a 3 mm thick plaque (150°C for 2 minutes, under pressure of 5 bar and cooled to room temperature). Si-atom content was analysed by XRF, PW1480/10 (supplied by Phillips).

In an alternative and more preferable method: Si-atom content was analysed by wavelength dispersive XRF (AXS S4 Pioneer Sequential X-ray Spectrometer supplied by Bruker). The pellet sample was pressed to a 3 mm thick plaque (150°C for 2 minutes, under pressure of 5 bar and cooled to room temperature).

Generally, in XRF- method, the sample is irradiated by electromagnetic waves with wavelengths 0.01-10 nm. The elements present in the sample will then emit fluorescent X-ray radiation with discrete energies that are characteristic for each element. By measuring the intensities of the emitted energies, quantitative analysis can be performed. The quantitative methods are calibrated with compounds with known concentrations of the element of interest e.g. prepared in a Brabender compounder.

The XRF results show the total content (wt%) of Si and are then calculated and expressed herein as Mol %-Content of functional silane-moieties (Si(Y)_{3-q}).
**Content (wt% and mol%) of polar comonomer:** Comonomer content (wt%) of the polar comonomer was determined in a known manner based on Fourier transform infrared spectroscopy (FTIR) determination calibrated with ¹³C-NMR as described in Haslam J, Willis HA, Squirrel DC. Identification and analysis of plastics, 2nd ed. London Iliffe books; 1972. FTIR instrument was a Perkin Elmer 2000, 1scann, resolution 4cm⁻¹. For determination of the comonomers, films with thickness 0.1 mm were prepared. The peak for the used comonomer was compared to the peak of polyethylene as evident for a skilled person (e.g. the peak for butyl acrylate at 3450 cm⁻¹ was compared to the peak of polyethylene at 2020 cm⁻¹). The weight-% was converted to mol-% by calculation based on the total moles of polymerisable monomers.

E.g. for high MA contents in a LDPE copolymer, such as 25-35wt% MA, e.g. 30 wt%, the peak height for methyl acrylate at 3457 cm⁻¹ with base point at 3510 cm⁻¹ was compared to the peak height of polyethylene at 2670 cm⁻¹ with base point 2450cm⁻¹. E.g. for high VA contents in a LDPE copolymer, such as 25-35wt% VA, e.g. 27-28 wt%, The peak height for vinyl acetate at 610 cm⁻¹ with base point at 580 cm⁻¹ was compared to the peak height of polyethylene at 2670 cm⁻¹ with base point 2450 cm⁻¹. The weight-% was converted to mol-% by calculation based on the total moles of polymerisable monomers.

**An alternative method to determine silane and polar comonomer content:** is to use NMR -method which would give equal results to above X-ray and FTIR method, i.e. results would be comparable to purposes of the invention: **Comonomer Content (NMR) (applicable i.a. for the determination of silane content, polar comonomer content and alpha-olefin comonomer content):** The comonomer content was determined by using ¹³C -NMR. The °C -NMR spectra were recorded on Bruker 400 MHz spectrometer at 130 °C from samples dissolved in 1,2,4-trichlorobenzene/benzene-d6 (90/10 w/w). The relevant peak for content determination is taken according to the compound or comonomer under measurement as known and within the skills of the skilled person.

As an example of comonomer content determination of polyolefin component (ii), such as ethylene content in random copolymer of propylene of up to 5 wt, e.g. 3.0-4.0 wt%, the following determination can be used:
**Content (wt% and mol%) of C2 in** polyolefin, such as polypropylene, **component (ii):** C2 content (wt%) of the polyolefin component was determined in a known manner based on Fourier transform infrared spectroscopy (FTIR) determination calibrated with ¹³C-NMR as described in Haslam J, Willis HA, Squirrel DC. Identification and analysis of plastics, 2nd ed. London Iliffe books; 1972. FTIR instrument was a Perkin Elmer 2000, 2 scans, resolution 4 cm⁻¹.
The peak for C2 was compared to the peak of polypropylene as evident for a skilled person. For determination of the C2 content, films with thickness 0.3-0.5 mm were prepared. The peak area for C2 at 730 cm⁻¹ with base line at 760-700 cm⁻¹ was compared to the peak height of polypropylene at 4323 cm⁻¹ with base point at 4700 cm⁻¹. The weight-% was converted to mol-% by calculation based on the total moles of polymerisable monomers.
**An alternative method to determine the olefin comonomer, such as butene or ethylene, e.g. C2 content: Olefin content, e.g. alpha-olefin content, such as ethylene or butene Content (NMR):** The C2 or C4 content was determined by using ¹³C -NMR and relevant peaks for C2 or, respectively, for C4. The ¹³C -NMR spectra were recorded on Bruker 400 MHz spectrometer at 130 °C from samples dissolved in 1,2,4-trichlorobenzene/benzene-d6 (90/10 w/w).
NMR -method would give comparable results to above FTIR method for C2 content determination from polyolefin, such as polypropylene, component (ii).
- **Gel content (wt%):** is measured according to ASTM D2765-90 using a sample consisting of said silane-crosslinked polyolefin composition of the invention.
- **Hot set elongation (%):** To determine that the different layers in the cable constructions are properly cured the hot set elongation and permanent set are determined according to IEC 60811-2-1, by measuring thermal deformation at 200°C and at a load of 0.1 MPa using a cable layer sample consisting of said silane-crosslinked polyolefin composition of the invention. In the preferred embodiment of the invention a load of 0.2 MPa is used.
Two dumb-bell test samples are prepared from a crosslinked cable layer consisting of a polyolefin composition to be tested by cutting a 1.0 mm thick layer sample from the test cable layer in the direction along the cable axis. The other dimensions were according to said standard. In the below examples, the test layer sample is taken from the outer semiconductive layer of the test cable by peeling said outer layer having a layer thickness of 1.0 mm from the insulation layer.
Each test sample is fixed vertically from upper end thereof in the oven and the load of 0.1 MPa or, preferably, 0.2 MPa are attached to the lower end of each test layer sample. After 15 min, 200°C in oven the distance between the premarked lines is measured and the percentage hot set elongation calculated, elongation %. For permanent set % , the tensile force (weight) is removed from the test samples and after recovered in 200°C for 5 minutes and then let to cool in room temperature to ambient temperature. The permanent set % is calculated from the distance between the marked lines.

**Strip force (kN/m, at 90°):** Cable samples of 30 cm of length were cut in cross sectional direction form a test cable which had an inner semiconductive layer with a thickness of 0.8 ± 0.05 mm, an insulation layer with a thickness of 5.5 ± 0.1 mm, and an outer semiconductive layer with a thickness of 1 ±0.1 mm. The test cables were prepared according to method described under below "Test cable and preparation method thereof" using the given inner semiconductive layer material and insulation layer material for the test sample and using the polyolefin composition to be tested as said outer semiconductive layer material. The strip force test can be made for test cable wherein said sample is in non-crosslinked or crosslinked form. The cable samples were conditioned minimum of 16 hours at 23°C and 55% relative humidity. Two cuts of 10 cm length and 10 mm apart each other were cut with knife through the outer semiconductive layer of said test cable in axial direction in such a depth to obtain a cut thickness corresponding the thickness of said outer semiconductive layer (1 mm). The separation of the cut of the outer semiconductive layer was initiated manually at the cut end of the cable sample. The cable was fixed to Alwetron TCT 25 tensile testing instrument (commercially available, supplier Alwetron) and the manually separated cut part was clamped onto a wheel assembly which is fixed to a moveable jaw of said instrument. The rotation of wheel assemply causes the separation of the jaws, and thus the peeling, i.e separation, of said semiconductive layer from said insulation layer to occur. The peeling was carried out using a peeling angle of 90° and peeling speed of 500 mm/min. The force required to peel said outer semiconductive layer from the insulation is recorded and the test was repeated at least ten times for each test layer sample. The average force divided by the width (10 mm) of th sample was taken as said strip force and the given values represent the average strip force of the test results obtained from said minimum ten tests.

### Test cable and preparation thereof

For the determination of properties of a polymer composition, test cables of three layer surrounding a conductor and consisting of an inner semiconductive layer, insulating layer and outer semiconductive layer were prepared using the following layer compositions.

### Test cables

### Test cables consisted of

### Insulation layer, IL, composition:

### Components:

- 95 wt.% of base polymer: conventional copolymer of ethylene and vinyltrimethoxy silane (VTMS)produced in high pressure by radical polymerisation having a density of 923 kg/m³, a MFR₂ of 0.9 g/10 min and a silane copolymer content of 1.3 wt.%, and
- 5 wt% Master batch (MB) of condensation catalyst:

### Preparation of Master batch (MB): comprising

- 91.3 wt% of a matrix resin: a conventional ethylene butylacrylate copolymer produced in high pressure by radical polymerisation having a density of 924 kg/m³, a MFR₂ of 17 g/10 min and polar comonomer content of 17 wt.% butylacrylate,;
- 2.0 wt% of a silanol condensation catalyst: conventional dibutyl tin dilaurate (DBTL);
- 1.7 wt% of stabilizer 1: pentaerythrityl-tetrakis(3-(3',5'-di-ter. butyl-4-hydroxyphenyl)-propionate (CAS-no. 6683-19-8)
- 2.0 wt% of stabilizer 2: 4.4'-thiobis(2-tert. butyl-5-methylphenol) (CAS-no. 96-69-5)
- 1.0 wt% of Zn-stearate.
The components of MB were compounded in a continuous Buss mixer with a screw diameter of 100 mm.

### Preparation of insulation layer, IL, composition:

Pellets of the IL components, i.e. base polymer and the MB, were dry blended just before cable extrusion to yield the composition for the insulating layer of a test cable.

### Inner semiconductive layer, IS, composition:

### Components:

- 47 wt% of conventional terpolymer of ethylene with butyl acrylate and VTMS produced in high pressure by radical polymerisation and having a density of 915 kg/m³, MFR₂ of 7 g/10 min and polar comonomer content of 17 wt.% butyl acrylate, silane componmer content of 1.8 wt.% vinyl trimethylsilane,
- 24 wt% of conventional low density polyethylene (LDPE) produced in high pressure by radical polymerisation and having a density of 923 kg/m³, and MFR₂ of 2 g/10min,
- 28 wt% of CB1: carbon black: EnsacoMS210
- 1 wt% of commercial stabiliser: Polymer of 2,2,4-trimethyl-1,2-dihydroquinoline (CAS-no. 26780-96-1)

Preparation, i.e. compounding, of said IS layer composition was done in a conventional manner in a Buss mixer before extrusion to a test cable as described later below under preparation of test cable.

### Outer semiconductive layer, OS, composition:

Components of the OS composition consisted of the polyolefin composition under test. The test polyolefin compositions used in the present experimental part were polyolefin compositions of inventive examples 1-13 and the polymer compositions of reference examples 1-6 as listed in table below.

Preparation of OS composition: was effected by compounding the components in a Buss mixer. In case of a silane-grafted polymer component (i) of compositions the inventive and reference examples, the polymer (i) was grafted during said preparation of the OS composition.

Accordingly, the grafting and compounding operations were made in a 46 mm continuous Buss mixer. The polymer (i) and polyolefin (ii), if present, were feeded in the first hopper of the mixer. The initiator and silane compound were injected into the mixer from an injection point which located just after the first hopper. The blend was mixed together and grafted at about 190°C. In case where filler (iii) was used like carbon black it was added in the subsequent second hopper together with the additive(s) and the mixing was continued at 190°C.

### Production of test cables

The test cables were prepared using so called 1 plus 2 extruder set-up, Mailerfer extruder, supplied by Mailerfer. That means that the inner semiconductive layer was extruded on the conductor first in an own head, and then the insulation and outer semiconductive layer are jointly extruded together and on the inner semiconductive in a double extruder head. The inner and outer semiconductive extruder screw had a diameter of 45 mm and the insulation screw had a diameter of 60 mm.

When producing the test cable, 1.6 m/min production rate was used for each test cable using the same conventional production conditions. Each test cable had the following properties:

**Table :**

| | Test cable construction |
|---|---|
| Conductor diameter | 50 mm² Al |
| Inner semiconductive layer, IS, thickness | 0.8 ± 0.05 mm |
| Insulation layer IL, thickness | 5.5 ± 0.1 mm |
| Outer semiconductive layer, OS, thickness | 1 ±0.1 mm |

The MB was only added to the insulation layer. The catalyst then during crosslinking migrates from the insulation layer out to the semiconductive layer and catalyses the crosslinking reaction.

### Crosslinking of the obtained test cables

The crosslinking of the test cables of 30 cm were done in water bath having 90 °C for 50 hours and then used for experimental testings as described below.

### Experimental part: Inventive and reference examples

### 1. Raw materials for the inventive examples 1- and reference examples 1

**Table 1: Raw materials**

| **Component** | **Type of component** | **Commercial name, supplier** | **MFR, 2,16 190 °C, g/10min** | **Melting point, °C** | **Density, Kg/m³** |
|---|---|---|---|---|---|
| Polymer (A) | | | | | |
| P1 (i) | Copolymer of ethylene and methyl acrylate containing 30 wt.% methyl acrylate (MA) | Elvaloy 1330 EAC, Dupont | 3 | 85 | 950 |
| P2 (i) | Copolymer of ethylene and vinyl acetate containing 27.5 wt% vinyl acetate (VA) | Escorene Ultra Eva, UL00728FF, Exxonmobil | 7 | 70 | 952 |
| | | | | | |
| PO1 (ii) | random copolymer of propylene and (C2 content of 3.30 wt%) | RF365MO, Borealis | 20 (at 230°C) | 145 | 905 |
| CB1 (iii) | Ensaco 210, Timcal | 130-180 | 44 | 52-58 | 65 |
| | | | | | |
| Si-Cl (B) | Vinyltriethoxysila ne (VTES), Silquest A151 Silanol, GE Advanced material | | | | |
| | | | | | |
| Initiator 1 | dicumylperoxide, Commercial grade | | | | |
| | | | | | |
| AO1 | Antioxidant, 2,2,4-trimethyl-1,2-dihydroquinoline Vulcanox HS, Lanxess | | | | |

Preparation of the polyolefin compositions of the inventive examples and reference examples was carried out as described above for OS composition of the test cable.

### Experimental tests

The combination of polymer (i) and polyolefin (ii) enable to produce a crosslinkable polyolefin composition which after crosslinking can have advantageously high crosslinking degree that provides an excellent hot set property to the crosslinked composition. Furthermore, such crosslinkable polyolefin compositions have very feasible processability even when containing high content of filler (iii), preferably carbon black. Moreover, the good processability can be achieved also when crosslinkable silane groups are introduced by grafting to polymer (i) and, surprisingly, in such high amounts that high crosslinking degree and the desired hot set can be achieved. The invention can thus provide a crosslinkable polyolefin composition comprising silane grafted polymer component (i) and polyolefin (ii) that is silane-crosslinkable and combines superior hot set property together with feasible processability, even with high CB content. Thus said polyolefin composition is useful material for cable layers, and also for semiconductive layers. The combination of high gel content, excellent hot set and processability (MFR) is shown with silane-grafted and crosslinked compositions of the invention with and without carbon black and using different polymer components (i), see table 2, compared to reference examples in table 3.

**Table 2: Silane-crosslinked, silane grafted compositions with or without CB and with different polymer (i) of Inventive examples**

| **Compostion of inventive examples, No**. | **Inv 1** | **Inv 2** | **Inv 3** | **Inv 4** | **Inv 5** |
|---|---|---|---|---|---|
| | (Wt %) | (Wt 33%) | (Wt %) | (Wt %) | (Wt %) |
| **P2 (i)** | 75,0 | 74,7 | 73,6 | 48,6 | 47,8 |
| **CB1 (iii)** | | | | 35,0 | 35,0 |
| **PO1 (ii)** | 23,1 | 23,1 | 23,1 | 15,0 | 15,0 |
| **AO1** | 1,15 | 1,15 | 1,15 | 0,75 | 0,75 |
| **Initiator** | 0,09 | 0,09 | 1,2 | 0,06 | 0,78 |
| **Si-C1 (B)** | 0,64 | 0,98 | 0,98 | 0,64 | 0,64 |
| **Total, wt**% | 100 | 100 | 100 | 100 | 100 |
| **Properties of final** | | | | | |
| **composition** | | | | | |
| **Silane ((AO)₃Si) content, mol %, based on the combined amount of (i) and (ii)** | | | | 0,28 | |
| **MFR 190°C, 2,16 kg, g/10min** | 1,1 | 0,55 | 0,35 | | |
| **MFR 190°C, 21,6 kg, g/10min** | | | | 1,4 | 0,4 |
| **Gel contents, wt%** | 48 | 48 | 54 | 45,1 | 52 |
| **Hot set elongation, %** | | | | 14,7 | 9,1 |
| **Permanent hot set, %** | | | | 7,3 | 3 |

**Table 2: continues**

| **Composition of inventive examples, No**. | **Inv 6** | **Inv 7** | **Inv 8** | **Inv 9** | **Inv 10** | **Inv 11** | **Inv 12** | **Inv 13** |
|---|---|---|---|---|---|---|---|---|
| | (Wt %) | (Wt %) | (Wt %) | (Wt %) | (Wt %) | (Wt %) | (Wt %) | (Wt %) |
| **P1 (i)** | 74,4 | 74,1 | 73,6 | 73,0 | 48,3 | 48,1 | 47,8 | 47,5 |
| **CB1 (iii)** | | | | | 35,0 | 35,0 | 35,0 | 35,0 |
| **PO1 (ii)** | 23,1 | 23,1 | 23,1 | 23,1 | 15,0 | 15,0 | 15,0 | 15,0 |
| **AO1** | 1,15 | 1,15 | 1,15 | 1,15 | 0,75 | 0,75 | 0,75 | 0,75 |
| **Initiator** | 0,18 | 0,20 | 0,22 | 0,22 | 0,12 | 0,13 | 0,14 | 0,14 |
| **Si-C1 (B)** | 1,20 | 1,50 | 2,00 | 2,50 | 0,78 | 0,98 | 1,30 | 1,62 |
| **Total, wt**% | 100 | 100 | 100 | 100 | 100 | 100 | 100 | 100 |
| | | | | | | | | |
| **Silane** | | | | | | | | 0,70 |
| **((AO)₃Si) content, mol %, based on the combined amount of (i) and (ii)** | | | | | | | | |
| **MFR 190°C, 2,16 kg , g/10min** | 2,05 | 2,00 | 2,30 | 3,35 | | | | |
| **MFR 190°C, 21,6 kg, g/10min** | | | | | 7,50 | 6,00 | 6,30 | 6,00 |
| **Gel content, %** | 44,5 | 45,0 | 46,5 | 46,2 | 47,4 | 46,8 | 48,0 | 49,2 |
| **Hot set elongation, %** | | | | | 23 | 19,3 | 14 | 10,4 |
| **Permanent hot set** | | | | | 9,0 | 7,0 | 3,0 | |

**Table 3: reference examples crosslinked silane-grafted with an without CB**

| **Composition of inventive examples, No.** | **Ref 1** | **Ref 2** | **Ref 3** | **Ref 4** | **Ref 5** | **Ref 6** |
|---|---|---|---|---|---|---|
| | (Wt%) | (Wt%) | (Wt%) | (Wt%) | (Wt%) | (Wt%) |
| **P2 (i)** | 98,6 | 97,8 | 97,8 | 64,2 | 63,61 | 63,6 |
| **CB1 (iii)** | | | | 35,0 | 35,00 | 35,0 |
| **AO1** | 1,15 | 1,15 | 1,15 | 0,75 | 0,75 | 0,75 |
| **Initiator** | 0 | 0,039 | 0,098 | 0,00 | 0,01 | 0,05 |
| **Si-C1 (B)** | 0 | 0,97 | 0,97 | 0,00 | 0,63 | 0,63 |
| **Total, wt%** | 100 | 100 | 100 | 100 | 100,00 | 100 |
| **Properties** | | | | | | |
| **MFR 190°C, 2,16 kg, g/10min** | 6,9 | 0.68 | NM | 20 | 3,5 | NM |
| **Gel contents, %** | 0 | 53 | 67 | 0 | 0 | 45 |
| **Hot set elongation, %** | NM | | | NM | NM | NM |

| | | | | | | |
|---|---|---|---|---|---|---|
| **NM =not measurable** | | | | | | |

## Claims

1. A polyolefin composition, e.g. in the form of powder, granules or pellets, which is selected from the following alternatives (1) to (3):
(1) a polyolefin composition which comprises
- a polymer component (i) which is a polymer (A) bearing silane-moieties, wherein polymer (A) is selected from:
a low density polyethylene (LDPE) homopolymer or copolymer, wherein the LDPE copolymer is a copolymer of ethylene and one or more polar comonomer(s),
a linear low density polyethylene (LLDPE),
a medium density polyethylene (MDPE) or
a high density polyethylene (HDPE),
- a polyolefin component (ii) which is a polymer of olefin having at least 3 carbon atoms, and, optionally,
- a filler (iii),
and which polyolefin composition is silane-crosslinkable to a silane-crosslinked polyolefin composition that has a gel content of more than 35.0 wt%, when measured according to ASTM D2765-95 using a sample consisting of said silane-crosslinked polyolefin composition;
(2) a polyolefin composition which comprises
- a polymer component (i) which is a polymer (A) bearing silane-moieties, wherein polymer (A) is selected from:
a low density polyethylene (LDPE) homopolymer or copolymer, wherein the LDPE copolymer is a copolymer of ethylene and one or more polar comonomer(s),
a linear low density polyethylene (LLDPE),
a medium density polyethylene (MDPE) or
a high density polyethylene (HYPE),
- a polyolefin component (ii) which is a polymer of olefin having at least 3 carbon atoms, and, optionally,
- a filler (iii),
and which polyolefin composition is silane-crosslinkable to a silane-crosslinked polyolefin composition that has a hot set elongation of less than 250%, when measured according to IEC 60811-2-1, at 200°C with a load of 0.1 MPa using a cable layer sample which has a thickness of 1.0 mm and consists of said silane-crosslinked polyolefin composition of the invention, or
(3) a polyolefin composition which comprises
- a polymer component (i) which is a polymer (A) bearing silane-moieties, wherein polymer (A) is selected from:
a low density polyethylene (LDPE) homopolymer or copolymer, wherein the LDPE copolymer is a copolymer of ethylene and one or more polar comonomer(s),
a linear low density polyethylene (LLDPE),
a medium density polyethylene (MDPE) or
a high density polyethylene (HDPE),
- a polyolefin component (ii) a polymer of olefin having at least 3 carbon atoms, and, optionally,
- (iii) a filler.

2. The composition as defined in claim 1, which satisfies the requirements of at least two of said alternatives (1), (2) and (3), e.g. a polyolefin composition (3) also having the properties of alternative (1) or (2), preferably all of alternatives (1)-(3).

3. The composition as defined in any of the preceding claims, which comprises
- 20 to 98 wt% preferably 30 to 80 wt%, more preferable 45 to 60 wt%, of said polymer component (i) which is a polymer (A) bearing silane-moieties,
- 2 to 50 wt%, preferably 2 to 40 wt%, more preferable 3 to 30 wt%, of said polyolefin component (ii) which is a polymer of an olefin having at least 3 carbon atoms, and
- 0 to 50 wt%, preferably 5 to 45 wt%, more preferably 25 to 45 wt%, of said optional filler (iii), based on the total amount of said polyolefin composition.

4. The composition as defined in any of the preceding claims, wherein the filler (iii) is present and said polyolefin composition has a melt flow rate, MFR₂₁, of at least 0.01 g/10 min, suitably of from 1.0 to 100 g/10 min, preferably of from 1.5 to 50 g/10 min, more preferably of from 2.0 to 20 g/10 min, and more preferably of 2.5 to 17 g/10 min, when measured according to ISO 1133 at 190°C using 21.6 kg load.

5. The composition as defined in any of the preceding claims, wherein said filler is present and is preferably a carbon black (CB), more preferably an electrically conductive CB which has a surface area of up to 300 m²/g, preferably of up to 140 m²/g, more preferably of up to 80 m²/g, more preferably of from 30 to 70 m²/g, when measured according to ASTM D 4820-99 (BET, N₂ adsorption).

6. The composition as defined in any of the preceding claims, wherein polymer (A) is a LDPE homo- or copolymer, wherein the LDPE copolymer is a copolymer of ethylene and one or more polar comonomer(s) (A2) which preferably contains one or more polar comonomer(s) that are selected from one or more of:
(a) vinyl carboxylate esters,
(b) (meth)acrylates,
(c) olefinically unsaturated carboxylic acids,
(d) (meth)acrylic acid derivatives, or
(e) vinyl ethers; preferably of vinyl esters of monocarboxylic acids having 1 to 4 carbon atoms, or of (meth)acrylates of alcohols having 1 to 4 carbon atoms;
more preferably of (a) vinyl acetate or (b) methyl (meth)acrylate, ethyl (meth)acrylate or butyl (meth)acrylate; most preferably said base LDPE copolymer of ethylene and one or more polar comonomer(s) (A2) is a LDPE copolymer of ethylene and one or more vinyl acetate, LDPE copolymer of ethylene and one or more methyl acrylate, a LDPE copolymer of ethylene and one or more acrylate or a LDPE copolymer of ethylene and one or more butyl acrylate, or any mixture thereof, which bears said silane-moieties.

7. The composition as defined in any of the preceding claims, wherein said base polymer (A) is said LDPE copolymer (A2) of polymer component (i) which contains said polar comonomer(s) of up to 70 wt%, preferably of from 0.5 to 35 wt%, more preferably of from 1.0 to 35 wt%, based on the amount of said base LDPE copolymer (A2); even more preferably contains said polar comonomer units in molar amount of more than 7.0 mol%, preferably of more than 7.5 mol%, even more preferably of from 8.0 to 15 mol%, based on the total moles of polymerisable monomers of said base LDPE copolymer (A2).

8. The composition as defined in any of the preceding claims, wherein said polyolefin component (ii) is selected from one or more of homopolymers of propylene, random copolymers of propylene, heterophasic copolymers of propylene or homo- or copolymers of butene, preferably is a homopolymer of propylene, a random copolymer of propylene, a heterophasic copolymers of propylene or any mixture thereof, whereby, in case of a copolymer of propylene, the comonomer is preferably selected from ethylene, (C4-C20) olefins, preferably from ethylene or (C4-C12)alpha-olefin, more preferably from ethylene or butene, or from any mixture thereof.

9. The composition as defined in any of the preceding claims, which is silane-crosslinkable and comprises said polymer component (i) wherein said silane-moieties are silane-crosslinkable, preferably said silane-moieties are hydrolysable silane-groups.

10. The composition as defined in any of the preceding claims, wherein said silane-crosslinkable polymer component (i) is a silane-grafted polymer component (i) obtainable by grafting hydrolysable silane compounds via radical reaction to said base polymer (A) of said polymer component (i).

11. A process for producing a polyolefin composition as defined in any of the preceding claims 1-10, comprising a step of silane-grafting said base polymer (A) of polymer component (i) by:
(i) mixing
- at least one base polymer (A) wherein polymer (A) is selected from:
a low density polyethylene (LDPE) homopolymer or copolymer, wherein the LDPE copolymer is a copolymer of ethylene and one or more polar comonomer(s),
a linear low density polyethylene (LLDPE),
a medium density polyethylene (MDPE) or
a high density polyethylene (HDPE),
- at least one unsaturated silane compound (B) and
- at least one free radical generating agent, together in said mixing device to form a silane-graftable composition (C), and
(ii) grafting the obtained silane-graftable composition (C) by radical reaction to obtain a silane-grafted polymer (A) component (i),
and wherein one or both of said polyolefin component (ii) and optional filler (iii), preferably at least said polyolefin component (ii), are present during said silane-grafting step or is/are added to the obtained silane-grafted component (i) after said silane-grafting step, more preferably said polyolefin component (ii) is present at said silane-grafting step and the optional filler (iii), if present is added after said silane-grafting step.

12. The process as defined in any of the preceding claims 11, wherein said silane compound (B) is added in amount of from 0.001 to 15 wt%, more preferably of from 0.01 to 5.0 wt%, most preferably of from 0.1 to 2.0 wt%, based on the weight of said base polymer component (A).

13. The process as defined in the preceding claim 11-12 for preparing a silane-crosslinkable polyolefin composition which comprises said silane-crosslinkable polymer component (i), preferably said silane-grafted polymer component (i), which bears hydrolysable silane-groups, whereby in said grafting step an unsaturated silane compound (B) is used which is a vinyl-containing silane compound of formula (I):
R¹SiR²_{q}Y_{3-q} (I)
wherein
R¹ is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group and
q is 0, 1 or 2, more preferably
wherein R¹ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and R², if present, is a methyl, ethyl, propyl, decyl or phenyl group, even more preferably said unsaturated silane compound (B) of formula (I) which is vinyl trimethoxysilane or vinyl triethoxysilane.

14. A process for producing a silane-crosslinked polyolefin composition, wherein said process comprises the steps of
providing a silane-crosslinkable polyolefin composition as defined in any of the preceding claims 1-10, or preferably said silane-crosslinkable polyolefin composition as defined in claim 9,
crosslinking said silane-crosslinkable polyolefin composition by contacting with a silane-crosslinking agent, preferably by contacting with a silanol-condensation catalyst and water, and recovering the obtained crosslinked polyolefin composition.

15. A crosslinked polyolefin composition obtainable by the process as defined in claim 14.

16. A silane-crosslinked polyolefin composition as defined in any of the preceding claims 1-10 or 15, which has a gel content of more than 35.0 wt%, preferably of from 37.0 to 80.0 wt%, more preferably of from 40.0 to 70.0 wt%, even more preferably of from 40.0 to 60.0 wt%, when measured according to ASTM D2765-95 using a sample consisting of said silane-crosslinked polyolefin composition of the invention and/or
which has a hot set elongation of less than 250%, preferably of less than 200 %, more preferably of less than 175%, more preferably of less than 100%, even more preferably of from 1.0 to 60 %, when measured according to IEC 60811-2-1, at 200°C with a load of 0.2 MPa using a cable layer sample which has a thickness of 1.0 mm and consists of said silane-crosslinked polyolefin composition of the invention.

17. A cable comprising a conductor surrounded with one or more layers, wherein at least one layer comprises said polyolefin composition as defined above in any of the preceding claims 1-10 or 15-16, preferably
a power cable, wherein said at least one layer is a semiconductive layer which comprises said polyolefin composition, as defined above in any of the preceding claims 1-10 or 15-16, and wherein said filler (iii) is present and is an electrically conductive carbon black; or
a power cable comprising, in the given order, at least an inner semiconductive layer, an insulation layer and an outer semiconductive layer, wherein at least said outer semiconductive layer comprises said polyolefin composition, as defined above in any of the preceding claims 1-10 or 15-16, and is preferably strippable.

## Patentansprüche

1. Polyolefinzusammensetzung, z.B. in der Form von Pulver, Granulat oder Pellets, die aus den folgenden Alternativen (1) bis (3) ausgewählt ist:
(1) einer Polyolefinzusammensetzung, die Folgendes umfasst:
- einen Polymerbestandteil (i), der ein Polymer (A) ist, welches Silanhälften trägt, wobei das Polymer (A) aus dem Folgenden ausgewählt ist:
einem Polyethylenhomopolymer oder Polyethylencopolymer mit niedriger Dichte (LDPE), wobei das LDPE-Copolymer ein Copolymer aus Ethylen und einem oder mehreren polaren Comonomeren ist,
einem linearen Polyethylen mit niedriger Dichte (LLDPE),
einem Polyethylen mit mittlerer Dichte (MDPE) oder
einem Polyethylen mit hoher Dichte (HDPE),
- einen Polyolefinbestandteil (ii), der ein Polymer aus einem Olefin ist, das mindestens 3 Kohlenstoffatome hat, und, optional,
- einen Füllstoff (iii), und wobei die Polyolefinzusammensetzung zu einer silanvernetzten Polyolefinzusammensetzung silanvernetzbar ist, die einen Gelgehalt von mehr als 35,0 Gew.-% hat, wenn dieser gemäß dem ASTM D2765-95 gemessen wird, wobei eine Probe verwendet wird, die aus der silanvernetzten Polyolefinzusammensetzung besteht;
(2) einer Polyolefinzusammensetzung, die Folgendes umfasst:
- einen Polymerbestandteil (i), der ein Polymer (A) ist, welches Silanhälften trägt, wobei das Polymer (A) aus dem Folgenden ausgewählt ist:
einem Polyethylenhomopolymer oder Polyethylencopolymer mit niedriger Dichte (LDPE), wobei das LDPE-Copolymer ein Copolymer aus Ethylen und einem oder mehreren polaren Comonomeren ist, einem linearen Polyethylen mit niedriger Dichte (LLDPE),
einem Polyethylen mit mittlerer Dichte (MDPE) oder
einem Polyethylen mit hoher Dichte (HDPE),
- einen Polyolefinbestandteil (ii), der ein Polymer aus einem Olefin ist, das mindestens 3 Kohlenstoffatome hat, und, optional,
- einen Füllstoff (iii), und wobei die Polyolefinzusammensetzung zu einer silanvernetzten Polyolefinzusammensetzung silanvernetzbar ist, die eine Hot-Set-Dehnung von weniger als 250 % aufweist, wenn diese gemäß dem IEC 60811-2-1 bei 200 °C mit einer Last von 0,1 MPa gemessen wird, wobei eine Kabelschichtprobe verwendet wird, die eine Dicke von 1,0 mm hat und aus der silanvernetzten Polyolefinzusammensetzung der Erfindung besteht, oder
(3) einer Polyolefinzusammensetzung, die Folgendes umfasst:
- einen Polymerbestandteil (i), der ein Polymer (A) ist, welches Silanhälften trägt, wobei das Polymer (A) aus dem Folgenden ausgewählt ist:
einem Polyethylenhomopolymer oder Polyethylencopolymer mit niedriger Dichte (LDPE), wobei das LDPE-Copolymer ein Copolymer aus Ethylen und einem oder mehreren polaren Comonomeren ist,
einem linearen Polyethylen mit niedriger Dichte (LLDPE),
einem Polyethylen mit mittlerer Dichte (MDPE) oder
einem Polyethylen mit hoher Dichte (HDPE),
- einen Polyolefinbestandteil (ii), der ein Polymer aus einem Olefin ist, das mindestens 3 Kohlenstoffatome hat, und, optional,
- einen Füllstoff (iii).

2. Zusammensetzung nach Anspruch 1, die die Erfordernisse von mindestens zwei der Alternativen (1), (2) und (3) erfüllt, z.B. eine Polyolefinzusammensetzung (3), die auch die Eigenschaften der Alternative (1) oder (2), vorzugsweise von allen Alternativen (1)-(3), aufweist.

3. Zusammensetzung nach einem der vorhergehenden Ansprüche, welche das Folgende umfasst:
- 20 bis 98 Gew.-%, vorzugsweise 30 bis 80 Gew.-% und besonders vorzugsweise 45 bis 60 Gew.-% des Polymerbestandteils (i), welcher ein Polymer (A) ist, das Silanhälften trägt,
- 2 bis 50 Gew.-%, vorzugsweise 2 bis 40 Gew.-% und besonders vorzugsweise 3 bis 30 Gew.-% von dem Polyolefinbestandteil (ii), welcher ein Polymer aus einem Olefin ist, das mindestens 3 Kohlenstoffatome aufweist, und
- 0 bis 50 Gew.-%, vorzugsweise 5 bis 45 Gew.-% und besonders vorzugsweise 25 bis 45 Gew.-% von dem optionalen Füllstoff (iii), basierend auf der Gesamtmenge von der Polyolefinzusammensetzung.

4. Zusammensetzung nach einem der vorhergehenden Ansprüche, wobei der Füllstoff (iii) vorliegt und die Polyolefinzusammensetzung einen Schmelzflussindex, MFR₂₁, von mindestens 0,01 g/10 min, zweckmäßigerweise von 1,0 bis 100 g/10 min, vorzugsweise von 1,5 bis 50 g/10 min, besonders vorzugsweise von 2,0 bis 20 g/10 Minuten und besonders vorzugsweise von 2,5 bis 17 g/10 min aufweist, wenn dieser gemäß dem ISO 1133 bei 190 °C unter Verwendung von einer Last von 21,6 kg gemessen wird.

5. Zusammensetzung nach einem der vorhergehenden Ansprüche, wobei der Füllstoff vorliegt und vorzugsweise ein Ruß (CB) ist, besonders vorzugsweise ein elektrisch leitender CB, der eine Oberfläche von bis zu 300 m²/g, vorzugsweise von bis zu 140 m²/g, besonders vorzugsweise von bis zu 80 m²/g und besonders vorzugsweise von 30 bis 70 m²/g aufweist, wenn diese gemäß dem ASTM D 4820-99 (BET, N₂-Adsorption) gemessen wird.

6. Zusammensetzung nach einem der vorhergehenden Ansprüche, wobei das Polymer (A) ein LDPE-Homo- oder -Copolymer ist, wobei das LDPE-Copolymer ein Copolymer aus Ethylen und einem oder mehreren polaren Comonomeren (A2) ist, die vorzugsweise ein oder mehrere polare Comonomere enthalten, die aus einem oder mehreren der Folgenden ausgewählt sind:
(a) Vinylcarboxylatestern,
(b) (Meth)acrylaten,
(c) olefinisch ungesättigten Carbonsäuren,
(d) (Meth)acrylsäurederivaten oder
(e) Vinylethern; vorzugsweise aus Vinylestern von Monocarbonsäuren, die 1 bis 4 Kohlenstoffatome haben, oder von (Meth)acrylarten von Alkoholen, die 1 bis 4 Kohlenstoffatome haben; besonders vorzugsweise aus (a) Vinylacetat oder (b) Methyl(meth)acrylat, Ethyl(meth)arcylat oder Butyl(meth)acrylat; besonders vorzugsweise ist das Basis-LDPE-Copolymer aus Ethylen und einem oder mehreren polaren Comonomeren (A2) ein LDPE-Copolymer aus Ethylen und einem oder mehreren Vinylacetaten, ein LDPE-Copolymer aus Ethylen und einem oder mehreren Methylacrylaten, ein LDPE-Copolymer aus Ethylen und einem oder mehreren Acrylaten oder ein LDPE-Copolymer aus Ethylen und einem oder mehreren Butylacrylaten oder irgendeine Mischung davon, das die Silanhälften trägt.

7. Zusammensetzung nach einem der vorhergehenden Ansprüche, wobei das Basispolymer (A) das LDPE-Copolymer (A2) von dem Polymerbestandteil (i) ist, das das(die) polare(n) Comonomer(e) mit bis zu 70 Gew.-%, vorzugsweise mit 0,5 bis 35 Gew.-% und besonders vorzugsweise mit 1,0 bis 35 Gew.-% enthält, basierend auf der Menge des Basis-LDPE-Copolymers (A2); und das besonders vorzugsweise die polaren Comonomereinheiten mit einer molaren Menge von mehr als 7,0 Mol-%, vorzugsweise mit mehr als 7,5 Mol-% und noch mehr bevorzugt mit 8,0 bis 15 Mol-% enthält, basierend auf den Gesamtmolen der polymerisierbaren Monomere von dem Basis-LDPE-Copolymer (A2).

8. Zusammensetzung nach einem der vorhergehenden Ansprüche, wobei der Polyolefinbestandteil (ii) aus einem oder mehreren von Propylenhomopolymeren, statistischen Propylencopolymeren, heterophasischen Propylencopolymeren oder Butenhomo- oder -copolymeren ausgewählt ist und vorzugsweise ein Propylenhomopolymer, ein statistisches Propylencopolymer, ein heterophasisches Propylencopolymer oder irgendwelche Mischungen davon ist, wobei, in dem Fall eines Propylencopolymers, das Comonomer vorzugsweise aus Ethylen, (C4-C20) Olefinen, vorzugsweise aus Ethylen oder (C4-C12) alpha-Olefin, besonders vorzugsweise aus Ethylen oder Buten oder irgendeiner Mischung davon ausgewählt ist.

9. Zusammensetzung nach einem der vorhergehenden Ansprüche, welche silanvernetzbar ist und den Polymerbestandteil (i) umfasst, wobei die Silanhälften silanvernetzbar sind und vorzugsweise die Silanhälften hydrolysierbare Silangruppen sind.

10. Zusammensetzung nach einem der vorhergehenden Ansprüche, wobei der silanvernetzbare Polymerbestandteil (i) ein silangepfropfter Polymerbestandteil (i) ist, der durch das Pfropfen von hydrolysierbaren Silanverbindungen mittels radikalischer Reaktion auf das Basispolymer (A) des Polymerbestandteils (i) erhalten werden kann.

11. Verfahren zur Herstellung einer Polyolefinzusammensetzung nach einem der vorhergehenden Ansprüche 1-10, umfassend einen Schritt des Silanpfropfens von dem Basispolymer(A) des Polymerbestandteils (i) durch:
(i) das Zusammenmischen von
- mindestens einem Basispolymer (A), wobei das Polymer (A) aus dem Folgenden ausgewählt ist:
einem Polyethylenhomopolymer oder Polyethylencopolymer mit niedriger Dichte (LDPE), wobei das LDPE-Copolymer ein Copolymer aus Ethylen und einem oder mehreren polaren Comonomeren ist, einem linearen Polyethylen mit niedriger Dichte (LLDPE),
einem Polyethylen mit mittlerer Dichte (MDPE) oder
einem Polyethylen mit hoher Dichte (HDPE),
- mindestens einer ungesättigten Silanverbindung (B) und
- mindestens einem freien Radikale erzeugenden Mittel in der Mischvorrichtung, um eine silanpfopfbare Zusammensetzung (C) zu bilden, und
(ii) das Pfropfen der erhaltenen silanpfopfbaren Zusammensetzung (C) mittels radikalischer Reaktion, um einen silangepfropften Polymer-(A)-Bestandteil (i) zu erhalten,
und wobei einer oder beide von dem Polyolefinbestandteil (ii) und dem optionalen Füllstoff (iii), vorzugsweise mindestens der Polyolefinbestandteil (ii), während des Schritts des Silanpfropfens vorliegt/vorliegen oder zu dem erhaltenen silangepfropften Bestandteil (i) nach dem Schritt des Silanpfropfens zugegeben wird/werden, wobei besonders vorzugsweise der Polyolefinbestandteil(ii) in dem Schritt des Silanpfropfens vorliegt und der optionale Füllstoff (iii), falls dieser vorliegt, nach dem Schritt des Silangepfropften zugegeben wird.

12. Verfahren nach Anspruch 11, wobei die Silanverbindung (B) mit einer Menge von 0,001 bis 15 Gew.-%, besonders vorzugsweise von 0,01 bis 5,0 Gew.-% und besonders vorzugsweise von 0,1 bis 2,0 Gew.-% zugegeben wird, basierend auf dem Gewicht des Basispolymerbestandteils (A).

13. Verfahren nach den vorhergehenden Ansprüchen 11-12 zur Herstellung einer silanvernetzbaren Polyolefinzusammensetzung, die den silanvernetzbaren Polymerbestandteil (i), vorzugsweise den silangepfropften Polymerbestandteil (i), der hydrolysierbare Silangruppen trägt, umfasst, wobei in dem Pfropfschritt eine ungesättigte Silanverbindung (B) verwendet wird, die eine vinylhaltige Silanverbindung mit der Formel (I) ist:
R¹SiR²_{q}Y_{3-q} (I)
wobei
R¹ eine ethylenisch ungesättigte Hydrocarbyl-, Hydrocarbyloxy- oder (Meth)aryloxyhydrocarbyl-Gruppe ist,
R² eine aliphatische gesättigte Hydrocarbyl-Gruppe ist,
Y, das gleich oder verschieden sein kann, eine hydrolysierbare organische Gruppe ist und
q 0,1 oder 2 ist, wobei besonders vorzugsweise
R¹ Vinyl, Allyl, Isopropenyl, Butenyl, Cyclohexanyl oder gamma-(Meth)acryloxypropyl ist; Y Methoxy, Ethoxy, Formyloxy, Acetoxy, Propionyloxy oder eine Alkyl- oder Arylaminogruppe ist; und R², falls vorhanden, eine Methyl-, Ethyl-, Propyl-, Decyl- oder Phenyl-Gruppe ist, und besonders vorzugsweise ist die ungesättigte Silanverbindung (B) mit der Formel (I) ein Vinyltrimethoxysilan oder Vinyltriethoxysilan.

14. Verfahren zur Herstellung einer silanvernetzten Polyolefinzusammensetzung, wobei das Verfahren die folgenden Schritte umfasst:
Bereitstellen einer silanvernetzbaren Polyolefinzusammensetzung nach einem der vorhergehenden Ansprüche 1-10 oder vorzugsweise der silanvernetzbaren Polyolefinzusammensetzung nach Anspruch 9,
Vernetzen der silanvernetzbaren Polyolefinzusammensetzung durch das In-Kontakt-Bringen mit einem Silanvernetzungsmittel, vorzugsweise durch das In-Kontakt-Bringen mit einem Silanol-Kondensationskatalysator und Wasser, und das Gewinnen der erhaltenen vernetzten Polyolefinzusammensetzung.

15. Vernetzte Polyolefinzusammensetzung, die durch das Verfahren nach Anspruch 14 erhalten werden kann.

16. Silanvernetzte Polyolefinzusammensetzung nach einem der vorhergehenden Ansprüche 1-10 oder 15, die einen Gelgehalt von mehr als 35,0 Gew.-%, vorzugsweise von 37,0 bis 80,0 Gew.-%, besonders vorzugsweise von 40,0 bis 70,0 Gew.-% und noch mehr bevorzugt von 40,0 bis 60,0 Gew.-% aufweist, wenn dieser gemäß dem ASTM D2765-95 gemessen wird, wobei eine Probe verwendet wird, die aus der silanvernetzten Polyolefinzusammensetzung der Erfindung besteht, und/oder
eine Hot-Set-Dehnung von weniger als 250 %, vorzugsweise von weniger als 200 %, besonders vorzugsweise von weniger als 175 %, besonders vorzugsweise von weniger als 100 % und noch mehr bevorzugt von 1,0 bis 60 % aufweist, wenn sie gemäß dem IEC 60811-2-1 bei 200 °C mit einer Last von 0,2 MPa gemessen wird, wobei eine Kabelschichtprobe verwendet wird, die eine Dicke von 1,0 mm hat und aus der silanvernetzten Polyolefinzusammensetzung der Erfindung besteht,.

17. Kabel, umfassend einen Leiter, der von einer oder mehreren Schichten umgeben ist, wobei mindestens eine Schicht die Polyolefinzusammensetzung nach einem der vorhergehenden Ansprüche 1-10 oder 15-16 umfasst, vorzugsweise
ein Energiekabel, wobei mindestens eine Schicht eine halbleitende Schicht ist, die die Polyolefinzusammensetzung nach einem der vorhergehenden Ansprüche 1-10 oder 15-16 umfasst und wobei der Füllstoff (iii) vorliegt und ein elektrisch leitender Ruß ist;
oder
ein Energiekabel, das in der angegebenen Reihenfolge mindestens eine innere halbleitende Schicht, eine Isolationsschicht und eine äußere halbleitende Schicht umfasst, wobei mindestens die äußere halbleitende Schicht die Polyolefinzusammensetzung nach einem der vorhergehenden Ansprüche 1-10 oder 15-16 umfasst und vorzugsweise abziehbar ist.

## Revendications

1. Composition de polyoléfine, par exemple sous forme d'une poudre, de granulés ou de pastilles, qui est choisie parmi les alternatives (1) à (3) suivantes :
(1) une composition de polyoléfine qui comprend
- un composant polymère (i) qui est un polymère (A) portant des groupements silane, dans lequel le polymère (A) est choisi parmi :
un homopolymère ou un copolymère de polyéthylène basse densité (LDPE), dans lequel le copolymère de LDPE est un copolymère d'éthylène et d'un ou de plusieurs comonomères polaires,
un polyéthylène linéaire basse densité (LLDPE),
un polyéthylène moyenne densité (MDPE), ou
un polyéthylène haute densité (HDPE),
- un composant polyoléfine (ii) qui est un polymère d'oléfine ayant au moins 3 atomes de carbone, et, éventuellement
- une charge (iii),
et composition de polyoléfine qui est réticulable par un silane à une composition de polyoléfine à silane réticulé qui a une teneur en gel supérieure à 35,0 % en poids, mesurée selon ASTM D2765-95 à l'aide d'un échantillon constitué de ladite composition de polyoléfine à silane réticulé ;
(2) une composition de polyoléfine qui comprend
- un composant polymère (i) qui est un polymère (A) portant des groupements silane, dans lequel le polymère (A) est choisi parmi :
un homopolymère ou un copolymère de polyéthylène basse densité (LDPE), dans lequel le copolymère de LDPE est un copolymère d'éthylène et d'un ou de plusieurs comonomères polaires,
un polyéthylène linéaire basse densité (LLDPE),
un polyéthylène moyenne densité (MDPE), ou
un polyéthylène haute densité (HDPE),
- un composant polyoléfine (ii) qui est un polymère d'oléfine ayant au moins 3 atomes de carbone, et, éventuellement
- une charge (iii),
et composition de polyoléfine qui est réticulable par un silane à une composition de polyoléfine à silane réticulé qui a un allongement à chaud inférieur à 250 %, mesuré selon IEC 60811-2-1, à 200°C avec une charge de 0,1 MPa à laide d'un échantillon de couche de câble qui a une épaisseur de 1,0 mm et qui est constitué de ladite composition de polyoléfine à silane réticulé de l'invention, ou
(3) une composition de polyoléfine qui comprend
- un composant polymère (i) qui est un polymère (A) portant des groupements silane, dans lequel le polymère (A) est choisi parmi :
un homopolymère ou un copolymère de polyéthylène basse densité (LDPE), dans lequel le copolymère de LDPE est un copolymère d'éthylène et d'un ou de plusieurs comonomères polaires,
un polyéthylène linéaire basse densité (LLDPE),
un polyéthylène moyenne densité (MDPE), ou
un polyéthylène haute densité (HDPE),
- un composant polyoléfine (ii) qui est un polymère d'oléfine ayant au moins 3 atomes de carbone, et, éventuellement
- une charge (iii).

2. Composition telle que définie dans la revendication 1, qui satisfait les exigences d'au moins deux desdites alternatives (1), (2) et (3), par exemple une composition de polyoléfine (3) ayant aussi les propriétés de l'alternative (1) ou (2), de préférence de toutes les alternatives (1) à (3).

3. Composition telle que définie dans l'une quelconque des revendications précédentes, qui comprend
- 20 à 98 % en poids, de préférence de 30 à 80 % en poids, mieux encore de 45 à 60 % en poids, dudit composant polymère (i) qui est un polymère (A) portant des groupements silane,
- 2 à 50 % en poids, de préférence 2 à 40 % en poids, mieux encore 3 à 30 % en poids, dudit composant polyoléfine (ii) qui est un polymère d'une polyoléfine comportant au moins 3 atomes de carbone, et
- 0 à 50 % en poids, de préférence 5 à 45 % en poids, mieux encore 25 à 45 % en poids, de ladite charge facultative (iii), par rapport à la quantité totale de ladite composition de polyoléfine.

4. Composition telle que définie dans l'une quelconque des revendications précédentes, dans laquelle la charge (iii) est présente et ladite composition de polyoléfine a un indice d'écoulement à chaud, MFR₂₁, d'au moins 0,01 g/10 min, avantageusement de 1,0 à 100 g/10 min, de préférence de 1,5 à 50 g/10 min, mieux encore de 2,0 à 20 g/10 min, et mieux encore de 2,5 à 17 g/10 min, mesuré selon ISO 1133 à 190 °C à l'aide d'une charge de 21,6 kg.

5. Composition telle que définie dans l'une quelconque des revendications précédentes, dans laquelle ladite charge est présente et est de préférence un noir de carbone (CB), mieux encore un CB conduisant l'électricité qui a une surface spécifique allant jusqu'à 300 m²/g, de préférence jusqu'à 140 m²/g, mieux encore jusqu'à 80 m²/g, mieux encore de 30 à 70 m²/g, mesurée selon ASTM D 4820-99 (BET, adsorption de N₂).

6. Composition telle que définie dans l'une quelconque des revendications précédentes, dans laquelle le polymère (A) est un homo- ou un copolymère de LDPE, dans lequel le copolymère de LDPE est un copolymère d'éthylène et d'un ou de plusieurs comonomères polaires (A2) qui contient de préférence un ou plusieurs comonomères polaires qui sont choisis parmi un ou plusieurs de :
(a) esters carboxylate de vinyle,
(b) (méth)acrylates,
(c) acides carboxyliques à insaturation oléfinique,
(d) dérivés d'acide (méth)acrylique, ou
(e) vinyléther ; de préférence des vinylesters d'acides monocarboxyliques ayant 1 à 4 atomes de carbone, ou de (méth)acrylates d'alcools ayant 1 à 4 atomes de carbone ;
mieux encore de (a) acétate de vinyle ou (b) (méth)acrylate de méthyle, (méth)acrylate d'éthyle ou (méth)acrylate de butyle ; tout particulièrement ledit copolymère de LDPE de base d'éthylène avec au moins un ou des comonomères polaires (A2) est un copolymère de LDPE d'éthylène et d'un ou de plusieurs acétate de vinyle, un copolymère de LDPE d'éthylène et d'un ou de plusieurs acrylate de méthyle, un copolymère de LDPE d'éthylène et d'un ou de plusieurs acrylate ou un copolymère de LDPE d'éthylène et d'un ou de plusieurs acrylate de butyle, ou tout mélange de ceux-ci, qui porte lesdits groupements silane.

7. Composition telle que définie dans l'une quelconque des revendications précédentes, dans laquelle ledit polymère de base (A) est ledit copolymère de LDPE (A2) du composant polymère (i) qui contient lesdits comonomères polaires à raison de jusqu'à 70 % en poids, de préférence de 0,5 à 35 % en poids, mieux encore de 1,0 à 35 % en poids, par rapport à la quantité dudit copolymère de LDPE de base (A2), encore mieux qui contient lesdits motifs comonomères polaires en une quantité molaire supérieure à 7,0 % en moles, de préférence supérieure à 7,5 % en moles, encore mieux de 8,0 à 15 % en moles, par rapport aux moles totales des monomères polymérisables dudit copolymère de LDPE de base (A2).

8. Composition telle que définie dans l'une quelconque des revendications précédentes, dans laquelle ledit composant polyoléfine (ii) est choisi parmi un ou plusieurs des homopolymères de propylène, des copolymères statistiques de propylène, des copolymères hétérophasiques de propylène ou des homo- ou des copolymères de butène, de préférence est un homopolymère de propylène, un copolymère statistique de propylène, un copolymère hétérophasique de propylène ou tout mélange de ceux-ci, de sorte que, dans le cas d'un copolymère de propylène, le comonomère soit de préférence choisi parmi l'éthylène, les oléfines (C4-C20), de préférence parmi l'éthylène ou une alpha-oléfine (C4-C12), mieux encore parmi l'éthylène ou le butène, ou parmi tout mélange de ceux-ci.

9. Composition telle que définie dans l'une quelconque des revendications précédentes, qui est réticulable par un silane et qui comprend ledit composant polymère (i) dans laquelle lesdits groupements silane sont réticulables par un silane, de préférence lesdits groupements silanes sont des groupes silane hydrolysables.

10. Composition telle que définie dans l'une quelconque des revendications précédentes, dans laquelle ledit composant polymère réticulable par un silane (i) est un composant polymère à silane greffé (i) susceptible d'être obtenu par greffage de composés de silane hydrolysables par une réaction radicalaire audit polymère de base (A) dudit composant polymère (i).

11. Procédé de production d'une composition de polyoléfine telle que définie dans l'une quelconque des revendications 1 à 10 précédentes, comprenant une étape de greffage d'un silane sur ledit polymère de base (A) du composant polymère (i) par :
(i) mélange
- d'au moins un polymère de base (A), dans lequel le polymère (A) est choisi parmi :
un homopolymère ou un copolymère de polyéthylène basse densité (LDPE), dans lequel le copolymère de LDPE est un copolymère d'éthylène et d'un ou de plusieurs comonomères polaires,
un polyéthylène linéaire basse densité (LLDPE),
un polyéthylène moyenne densité (MDPE), ou
un polyéthylène haute densité (HDPE),
- d'au moins un composé de silane insaturé (B) et
- d'au moins un agent générant des radicaux libres, les uns avec les autres dans ledit dispositif de mélange pour former une composition greffable par un silane (C), et
(ii) le greffage de la composition greffable par un silane (C) obtenue par une réaction radicalaire pour donner un composant polymère (A) à silane greffé (i), et dans lequel ledit composant polyoléfine (ii) ou la charge facultative (iii) ou les deux, de préférence au moins ledit composant de polyoléfine (ii), sont présents pendant ladite étape de greffage d'un silane ou sont ajoutés au composant à silane greffé (i) obtenu après ladite étape de greffage d'un silane, mieux encore ledit composant polyoléfine (ii) est présent dans ladite étape de greffage d'un silane et la charge facultative (iii), si elle est présente, est ajoutée après ladite étape de greffage d'un silane.

12. Procédé tel que défini dans l'une quelconque de la revendication 11, dans lequel ledit composé de silane (B) est ajouté en une quantité de 0,001 à 15 % en poids, mieux encore de 0,01 à 5,0 % en poids, tout particulièrement de 0,1 à 2,0 % en poids, par rapport au poids dudit composant polymère de base (A).

13. Procédé tel que défini dans les revendications 11 et 12 précédentes pour préparer une composition de polyoléfine réticulable par un silane qui comprend ledit composant polymère réticulable par un silane (i), de préférence ledit composant polymère à silane greffé (i), qui porte des groupes silane hydrolysables, de sorte que, dans ladite étape de greffage, un composé de silane insaturé (B) soit utilisé qui est un composé de silane contenant un vinyle de formule (I) :
R¹SiR²_{q}Y_{3-q} (I)
dans laquelle
R¹ est un groupe hydrocarbyle, hydrocarbyloxy ou (méth)acryloxy-hydrocarbyle à insaturation éthylénique,
R² est un groupe hydrocarbyle aliphatique saturé,
Y, qui peut être identique ou différent, est un groupe organique hydrolysable et
q vaut 0, 1 ou 2, mieux encore
dans laquelle R¹ est un groupe vinyle, allyle, isopropényle, butényle, cyclohexanyle ou gamma-(méth)acryloxy-propyle ; Y est un groupe méthoxy, éthoxy, formyloxy, acétoxy, propionyloxy ou alkyl- ou aryl-amino ; et R², s'il est présent, est un groupe méthyle, éthyle, propyle, décyle ou phényle, encore mieux ledit composé de silane insaturé (B) de formule (I) qui est le vinyltriméthoxysilane ou le vinyltriéthoxysilane.

14. Procédé de production d'une composition de polyoléfine à silane réticulé, dans lequel ledit procédé comprend les étapes de
fourniture d'une composition de polyoléfine réticulable par un silane telle que définie dans l'une quelconque des revendications 1 à 10 précédentes, ou de préférence ladite composition de polyoléfine réticulable par un silane telle que définie dans la revendication 9, réticulation de ladite composition de polyoléfine réticulable par un silane par mise en contact avec un agent de réticulation de silane, de préférence par mise en contact avec un catalyseur de condensation de silanol et de l'eau, et récupération de la composition de polyoléfine réticulée obtenue.

15. Composition de polyoléfine réticulée susceptible d'être obtenue par le procédé tel que défini dans la revendication 14.

16. Composition de polyoléfine à silane réticulé telle que définie dans l'une quelconque des revendications 1 à 10 ou 15 précédentes, qui a une teneur en gel supérieure à 35,0 % en poids, de préférence de 37,0 à 80,0 % en poids, mieux encore de 40,0 à 70,0 % en poids, encore mieux de 40,0 à 60,0 % en poids, mesurée selon ASTM D2765-95 à l'aide d'un échantillon constitué de ladite composition de polyoléfine à silane réticulé de l'invention et/ou
qui a un allongement à chaud inférieur à 250 %, de préférence inférieur à 200 %, mieux encore inférieur à 175 %, mieux encore inférieure à 100 %, encore mieux de 1,0 à 60 %, mesuré selon IEC 60811-2-1, à 200°C avec une charge de 0,2 MPa à l'aide d'un échantillon de couche de câble qui a une épaisseur de 1,0 mm et qui est constitué de ladite composition de polyoléfine à silane réticulé de l'invention.

17. Câble comprenant un conducteur entouré d'une ou de plusieurs couches, dans lequel au moins une couche comprend ladite composition de polyoléfine telle que définie ci-dessus dans l'une quelconque des revendications 1 à 10 ou 15 et 16 précédentes, de préférence
un câble d'alimentation, dans lequel ladite au moins une couche est une couche semi-conductrice qui comprend ladite composition de polyoléfine telle que définie ci-dessus dans l'une quelconque des revendications 1 à 10 ou 15 et 16 précédentes, et dans lequel ladite charge (iii) est présente et est un noir de carbone conduisant l'électricité ; ou
un câble d'alimentation comprenant, dans l'ordre donné, au moins une couche semi-conductrice intérieure, une couche isolante et une couche semi-conductrice extérieure, dans lequel au moins ladite couche semi-conductrice extérieure comprend ladite composition de polyoléfine telle que définie ci-dessus dans les revendications 1 à 10 ou 15 et 16 précédentes et est de préférence détachable.
